# EUROPEAN PATENT SPECIFICATION

(11) **EP 4 111 285 B1**
(45) Date of publication and mention of the grant of the patent: **12.06.2024**
(21) Application number: 21709634.6
(22) Date of filing: 26.02.2021
(51) Int. Cl.: G05D 1/02

(54) **METHOD FOR CONTROLLING AN AUTOMATIC GUIDED VEHICLE AND CONTROL SYSTEM ADAPTED TO EXECUTE THE METHOD**
VERFAHREN ZUR STEUERUNG EINES AUTOMATISCH GEFÜHRTEN FAHRZEUGS UND STEUERSYSTEM ZUR DURCHFÜHRUNG DES VERFAHRENS
PROCÉDÉ DE COMMANDE D'UN VÉHICULE À GUIDAGE AUTOMATIQUE ET SYSTÈME DE COMMANDE CONÇU POUR EXÉCUTER LE PROCÉDÉ

(30) Priority: 28.02.2020 DE 102020105334
(43) Date of publication of application: 04.01.2023
(73) Proprietor: Navflex Inc., Thornton, CO 80602 (US)
(72) Inventor: TRETYAKOV, Slava, 53639 Königswinter (DE)
(74) Representative: Winter, Brandl - Partnerschaft mbB
(86) International application number: PCT/EP2021/054935
(87) International publication number: WO 2021/170852

(56) References cited:
- DE-A1- 10 234 730
- DE-A1-102017 011 768
- US-A- 4 595 331
- US-A1- 2013 054 129
- US-A1- 2018 068 255
- US-A1- 2019 099 884

## Description

### Field of the invention

This invention relates in general to material loading and offloading/unloading into/from trucks or containers with autonomous forklifts or other autonomous vehicles when entering the truck from the rear side is required in order to place the material inside the track or container (load) or remove it from there (unload). More specifically an apparatus and a method for automated rear-end palletized goods loading and unloading to freight trucks or containers by means of driverless fork-lift loading machines are provided. In addition to trucks and containers, the invention is also applicable to other kinds of freight transport means like trailers or goods wagons. Freight transport means are either entered from the rear side, like in the case of trucks, or are entered at a loading zone, like a loading dock. When loading or unloading, the material or goods are either loaded into the freight transport means or are removed from the freight transport means. Furthermore, it is preferred that the goods or materials are palletized so that a driverless fork-lift machine is able to load and unload the freight transport means.

### Background of the invention

Currently, different automated and autonomous transport systems already exist capable of transporting goods from one location to another location within a production or storage areas, including transporting goods placed on a pallet. Some of those automated transport systems include forks mounted in the forward or rear side of the vehicle, i.e. forklift. There are also known forklifts which are able to load or unload goods inside a truck from a side or also from the rear entrance when the trucks are docked at loading gates. Although the latter provides a solution, the solution is primary designed for specially engineered fork-lifts capable of transporting two loads at the time and equipped with tilt and side-shift mechanisms to shift the loads to the side when travelling only parallel to walls. These fork-lifts are counterbalanced. Additionally, the presented approach relies on the motor current or pressure sensors to sense when the load hits another load in the row or the end front wall in order to place the load. To overcome the sensing limitations such solutions usually take two loads picked up from the longer sides of the pallets (only possible for counterbalanced vehicles having no wheels on forks) in order to fill the row in the trailer completely and do not deal with situations when placing a pallet between or next to in the same row is required. When dealing with heavy loads such vehicles project high pressure on the surface of trailers which can lead to their damages. Also, such automated vehicles require the load to be specially prepared for pick up and therefore require investment into infrastructure which may not always be possible because of the lack of space or already existing automated lines.

In reality, there are many cases when forklifts are used that are capable of transporting only a single load and do not have tilt and especially shift mechanisms. Moreover, when the loads are not properly formed and a required to be tightly placed to each other in a row often of more than two loads, the loads a frequently getting stuck and require corrections. In this case relying on the current or pressure sensors would result in that loading tasks are not completed. The same includes the reverse operation, i.e. unloading similarly placed goods from the truck from the rear side of the truck. Simpler forklifts that are used for loading or unloading operations are cheaper and are successfully and efficiently used manually. Often the loads are picked up from the shorter sides of the pallets where there are pockets that allow also not counterbalanced forklifts with wheels on the forks to drive in to engage with the load. As a result, such loads have to be placed in rows of three inside of trailers in order to fully fill the trailer. In a larger transport like railway wagons such rows can be even larger regardless of the side the pallets are picked up. A common problem in such cases is a tight placement of a pallet next to another one which require not only high precision but also advanced sensing and load handling techniques. The loads cannot be properly formed, can get stuck and can then require corrections. Quite often the space between the pallets is limited to nearly 0 mm.

In addition to the above-mentioned problem, there is a challenge loading the pallets themselves. Even though the operations are mostly performed manually, they also require precision and a certain level of experience placing the pallets very close to each other. Quite often the space between the pallets is limited to nearly 0 mm, the loads on the pallets are not perfectly formed. These all requires special techniques to push the pallets in, quite often with a force, take them out and in again.

Additionally, when the rows are not properly formed from the very beginning, the forklift operators realize this very late when nearly all rows are formed, and the last row does not fit. As a result, the door is not able to be closed. In this case the whole load has to be removed and placed newly in the truck or container.

At the present time, in most of the production or logistic facilities, loading goods to a final destination transport vehicle (trucks or containers) or receiving and therefore unloading them from such vehicles is still performed manually or with a help of loading/unloading complex mechanical systems installed inside such trucks or containers, as shown for instance in https://www.youtube.com/watch?v=pbpvyZgZgL0&list=PL2kviFOXIFHZAt1 UHiaYuvZe5 RzmABCJk&index=10&t=0s).

Document US 8,192,137 B2 discloses a system and a method that are primarily designed for a forklift having two pairs of forks that in addition to a standard vertical shift (lifting) can be shifted horizontally and also tilted. A single pair of forks vehicle requires a side shifting mechanism to densely place the load. The method according to this document is capable of traveling only a straight line parallel to a wall inside the transport.

Further examples of prior art can be found in DE 10 2017 011768 and US 4 595 331.

### Summary of the invention

### Technical problem

The object of the present invention is to provide an apparatus and a method with increased efficiency during loading and/or unloading of material in relation to a receptacle. In addition, an unmanned apparatus and a method of high efficiency are to be provided wherein no modification of the trucks and/or containers are to be made and there is preferably no need of installing special mechanical equipment. This also applies to other freight transport means like trailers and wagons.

### Solution to the problem

This object is solved by the subject matters of independent claims 1, 3, 7, and 9. Further aspects are defined in the subclaims.

According to a first aspect of the present invention, a method for controlling an automatic guided vehicle (AGV) or an Autonomous Mobile Robot (AMR) to transport at least two loads from a load picking-up area to an operating area in which the at least two loads are to be placed in corresponding loading areas, is provided, wherein the method comprises the steps of: picking-up a first load with the AGV in the load picking-up area, guiding the AGV with the first load by guiding means from the load picking-up area to the operating area, moving the AGV in the operating area to map virtual boundaries of the operating area within which the at least two loads are to be placed in the corresponding loading areas, generating a loading pattern for placing the at least two loads in the corresponding loading areas within the virtual boundaries of the operating area and generating travel trajectories which the AGV has to travel with each of the at least two loads to place the at least two loads in the corresponding loading areas, placing the first load in the corresponding loading area based on the generated loading pattern and the generated travel trajectory for the first load, mapping the operating area with the first load placed in the corresponding loading area and verifying whether the first load in the corresponding loading area corresponds to the loading pattern in such a manner that the at least one further load is able to be placed according to the loading pattern, and if the first load in the corresponding loading area does not correspond to the loading pattern in such a manner that the at least one further load is able to be placed according to the loading pattern, correcting the position and/or orientation of the first load in such a manner that the at least one further load is able to be placed according to the loading pattern. Instead of the operating area, an area of the freight transport means can be used.

In the method of the first aspect, the steps of moving the vehicle in the operating area and generating a loading pattern may occur during the placement operation for the first load.

According to the second aspect, which depends on the first aspect, a method for controlling an AGV is provided, wherein the step of guiding the AGV includes navigating through position synchronization checkpoints and entering a confined space in which the operating area is defined through a rear entry or loading gates. In such a manner loading with a high velocity of the AGV is possible.

According to the third aspect, a control system, which adapted to execute the method of the first aspect, is provided.

According to the fourth aspect, an automatic guided vehicle with a control system according to the third aspect is provided.

According to the fifth aspect, a control kit, which is adapted to be installed in a non-automatic guided vehicle to enable such a vehicle to execute the method of the first aspect in an automatic manner, is provided.

With the technique of the present invention it is possible to automatically monitor the placement density. As a result, the efficiency of loading tasks is increased, and time can be saved. Moreover, with the solution of the present invention, last step production automation is made.

The proposed solution eliminates the need of installing a special equipment or performing any types of modifications to load transporting containers or to operating environment due to natural navigation and allows loading or unloading goods completely autonomously with unmanned fork lifters or other unmanned transport vehicles of a size capable entering the goods containers or trucks through the rear-side. The trucks in this case are normally docked at load gates allowing direct access, normally via a ramp, to the inner area for loading; containers can be either placed on the ground or be loaded on a container transporting truck and can also be docked to a loading gate of a logistic facility or shipment/receiving area of a production facility.

In case of the loading task, the automated forklift equipped with the necessary sensing and computing hardware and running the autonomous navigation and application software can sense the inner area of the goods container and identify its dimensions, orientation, and offset, if it is docked not perfectly straight at the loading gates or shifted from the expected position. Based on the loading task received from the server and containing information about the size of the goods to be loaded from the pick-up area and their amount, a loading program is computed and a loading pattern and paths, i.e. a plan, are calculated and executed. During the execution of the loading task the goods are picked up from a defined location and loaded tightly to each other inside the truck container. In case the goods are not properly formed to fit tightly in space, the system is capable of detecting that. The detection works preferable as well as during the pick-up task as during the loading task. During picking up of the pallet it is identified how good the load is formed. In case of bad forming of the load the pallet may be rejected and the task is paused. Subsequently, the supervising system/server is notified.

During and after each placement of the goods the placement quality is automatically controlled and in case of a non-satisfactory result a correction may be attempted. For better understanding of "during each placement", here a case is meant when the load stuck situation is detected, i.e., that the forklift cannot push the load to the desired load position and needs to back up and attempt a correction.

For the unloading task, the docked or placed container's dimensions, orientation, and offset at the unloading point (or at a gate) are automatically identified and the loaded goods pattern together with the virtual boundary of the operating area are automatically recognized and mapped with the help of the on-board sensing and computing equipment of the automated forklift's (AGV). The unload plan is therefore computed and executed in such a way that the goods are picked up from the goods transporting container/truck through the rear/unload entrance including entering the container/truck area to pick up the goods and bring them to an order location received from the server, wherein the order is defined in the unload task. The fleet management software is involved in the following manner: The fleet management software sends only the information about the load, e.g. the number of pallets as minimum, formation and dimensions, if available, the gate number or container location information, and unloading position or initial coordinates and a desired storing pattern. All the rest is computed on board of the AGV so that the fleet management software has only a supervisory role.

The main advantage of automating the loading and unloading tasks with unmanned automated vehicles according to the present invention is the resting time optimization of the trucks drivers which enables the trucks drivers to have the required rest time before the next trip while waiting for the goods to be loaded in parallel. Furthermore, an optimization of the transport weighting time and loading gates usage through predictable deterministic process can be obtained. For the automation of the whole transport or logistic chain including the unmanned trucks, this is a step in the delivery process automation that needs to be additionally implemented. This includes the appearance of unmanned trailers or other unmanned freight transport means. This step in the delivery chain automation needs to be properly implemented to serve as many cases as possible.

According to a first additional aspect of the invention, a system for automated materials/goods loading and unloading can be provided, which comprises a self-contained automatically-driven robotic material handling vehicle, including:
a) drive-by-wire operation with automated and manual controls,
b) a location determining subsystem,
c) a proximity obstacle detection and avoidance subsystem,
d) a loading and unloading sequence, pattern, and trajectory planner,
e) a trajectory following execution controller,
f) a load placement recognition and monitoring subsystem,
g) a loading and unloading task request client, and
h) a loading and unloading task management subsystem.

In a system according to a second additional aspect, which depends on the first additional aspect, the map can include a task to task dynamically changing area of an increased plan execution precision, where the plan is a list of sub-plans consisting of way-points for each load of the loading task.

In a system according to a third additional aspect, which depends on the one of the other additional aspects, the map can include more than one increased precision plan execution areas, including position synchronization markers for the location error cancellation.

In a system according to a fourth additional aspect, which depends on the one of the other additional aspects, the vehicle's database includes vehicle mission plan, tracking data, and vehicle's status.

A system according to a fifth additional aspect, which depends on the one of the other additional aspects, can include sensors and processing electronics (referred as sensor kit) enabling material handling vehicles to navigate in confined environments like inside trucks or containers, including entering them through rear entry or loading gates and navigating through position synchronization checkpoints.

A system according to a sixth additional aspect, which depends on the one of the other additional aspects, can include sensors and processing electronics (referred as sensor kit) installable in existing commercial material handling vehicles equipped with forks or other means of transporting goods or materials.

A system according to a seventh additional aspect, which depends on the one of the other additional aspects, can include sensors and processing electronics (referred as sensor kit), where the width of the material handling vehicle requires to be smaller or equal the width of the handling material.

A system according to an eighth additional aspect, which depends on the one of the other additional aspects, can include automatically-driven robotic material handling vehicle with sensors and processing electronics which enable the vehicle to navigate in confined environments like inside trucks or containers, including entering them through rear entry or loading gates and navigating through position synchronization checkpoints.

A system according to a ninth additional aspect, which depends on the one of the other additional aspects, can include automatically-driven robotic material handling vehicle with sensors and processing electronics in the form of autonomous fork and pallet trucks.

A system according to a tenth additional aspect, which depends on the one of the other additional aspects, can include sensors and processing electronics (referred as sensor kit) in a modular, mission specific setup within a common location determination architecture.

A system according to a eleventh additional aspect, which depends on the one of the other additional aspects, can include automatically-driven robotic material handling vehicle with modular, mission specific sensors and processing electronics within a common location determination architecture.

In a system according to a twelfth additional aspect, which depends on the one of the other additional aspects, one or more of the following sensors are fused into a common location determination architecture:
IMU,
magnetometer,
differential odometry (through magnetic or optical encoders)
visual fiducials,
2D range-finders (2D LIDARs),
3D range-finders (3D LIDARs),
single measurement range sensors,
optical sensors (single cameras or stereo pairs)
optical sensors (single cameras or stereo pairs) passive, or with light-emitting system with built-in depth/range calculation.

The system according to a twelfth additional aspect is not restricted to differential odometry but also other odometry can be used. The visual fiducials as well as the optical sensors might be optional.

A system according to a thirteenth additional aspect, which depends on the one of the other additional aspects, can include sensors and processing electronics (referred as sensor kit) to read and interpret visual codes that encode location and other associated data as fiducials to determine indoor locations.

A system according to a fourteenth additional aspect, which depends on the one of the other additional aspects, can include automatically-driven robotic material handling vehicle with sensors and processing electronics to read and interpret visual codes that encode location and other associated data as fiducials to determine indoor locations.

A method according to a fifteenth additional aspect is for automatically controlling a vehicle to transport at least two loads from a load picking-up area to an operating area in which the at least two loads are to be placed in corresponding loading areas, wherein the method comprises the steps of obtaining information at least about pick-up locations, about the amount and the dimensions of the loads to be transported, and, optionally about the loading areas, scanning the operating area to identify at least the space dimensions of the loading areas, generating a loading pattern for the transport of the at least two loads from the load picking-up area to the loading areas, wherein the loading pattern includes target positions and target orientations of the vehicle to be sequentially reached, executing the loading pattern until completion of the loading task of transporting the at least two loads to the operating area. In such a manner, the transport of the at least two loads can be efficiently executed while needing a minimal amount of control structure.

In a method according to a sixteenth additional aspect, which depends on the fifteenth additional aspect, on completion of the loading task, success of the execution of the loading task, is reported by the vehicle and the vehicle is navigated to a predefined waiting location. As a result, the loading process can be terminated within a short time while have the appropriate information for further transporting the loads available.

In a method according to a seventeenth additional aspect, which depends on the fifteenth or sixteenth additional aspects, if a failure occurs during executing the loading pattern, a recovery behavior for correcting the failure is executed and, if correcting the failure fails, the failure is reported to a server or to a fleet management system. With such a method appropriate actions for correctly loading can be immediately taken.

In a method according to an eighteenth additional aspect, which depends on the fifteenth to seventeenth additional aspects, scanning the loading area includes information on the offset dx, dy between the load picking-up area and the operating area and optionally information on angle α of orientation difference between the load picking-up area and the operating area. As a result, with a minimum of received information, an efficient generation of a loading pattern is possible.

In an alternative to the eighteenth additional aspect, which depends on the fifteenth to seventeenth additional aspects, a method is provided in which scanning the operating area includes obtaining information on at least three corners defining a polygon within which that at least two loads are to be placed and wherein optionally the polygon of the operating area is added to the pick-up area prior to generating the loading pattern for the transport of the at least two loads from the load picking-up area to the loading areas. In such a manner the perimeter of the transport system can be determined in an efficient manner.

In this alternative to the eighteenth additional aspect, obtaining information on the at least three corners defining a polygon might include using a filtering technique for determining loading areas to which a traverse is possible with a predefined precision and optionally range or image data processing might be used for determining at least one wall with respect to the polygon of the operating area in relation to which at least one of the at least two loads are to be placed. With these information safely traversable areas are appropriately defined and the extraction and verification of information on the transport system can be effected in an efficient manner.

Furthermore, in relation to the eighteenth additional aspect, prior to generating the loading pattern two corners of the polygon might be used to determine a tilt between the operating area and the pick-up area and optionally a two-dimensional shift between the operating area and the pick-up area. This enables a computation of the operating area with a minimum of computational efforts.

In a method according to a nineteenth additional aspect, which depends on the fifteenth to eighteenth additional aspects, the loading pattern contains sub-plans in form of trajectories wherein each sub-plan ends with a drop-off action with respect to a load. This subdivision enables an efficient use of information which have been once obtained.

A vehicle according to an twentieth additional aspect is able to automatically transport at least two loads from a load picking-up area to an operating area in which the at least two loads are to be placed in corresponding loading areas, wherein the vehicle comprises: means for obtaining information at least about pick-up locations, about the amount and the dimensions of the loads to be transported, and about the loading areas, means for scanning the loading area to identify at least the space dimensions of the loading area, means for generating a loading pattern for the transport of the at least two loads from the load picking-up area to the loading areas, wherein the loading pattern includes target positions and target orientations of the vehicle to be sequentially reached, and means for executing the loading pattern to automatically transport the at least two loads to the operating area until completion of the loading task. Such a vehicle enables an efficient executing of the method according to the fifteenth additional aspect.

A vehicle according to a twentieth additional aspect is able to automatically transport at least two loads from a load picking-up area to an operating area in which the at least two loads are to be placed in corresponding loading areas, wherein the vehicle comprises: means for picking-up a first load with the vehicle in the load picking-up area, means for guiding the vehicle with the first load by guiding means from the load picking-up area to the operating area, means for moving the vehicle, during the placement operation for the first load, in the operating area to map virtual boundaries in the operating area within which the at least two loads are to be placed in the corresponding loading areas, means for generating, during the placement operation for the first load, a loading pattern for placing the at least two loads in the corresponding loading areas within the vehicle boundaries in the operating area and generating travel trajectories which the vehicle has to travel with each of the at least two loads to place the at least two loads in the corresponding loading areas, means for placing the first load in the corresponding loading area based on the generated loading pattern and the generated travel trajectory for the first load, means for mapping the operating area with the placed first load placed in the corresponding loading area and verifying whether the first load in the corresponding loading area corresponds to the loading pattern in such a manner that the at least one further load is able to be placed according to the loading pattern, and means for correcting the position and/or orientation of the first load in such a manner that the at least one further load is able to be placed according to the loading pattern in the case, that the first load in the corresponding loading area does not correspond to the loading pattern in such a manner that the at least one further load is able to be placed according to the loading pattern. Such a vehicle enables an efficient executing of the method according to the first aspect.

In a vehicle according to a twenty-first additional aspect, which depends on the twentieth additional aspect, the means for executing the loading pattern is able to recognize an improper load placement or a problem with inserting a load by the use of at least one 3D range or optical camera. Therefore, a recognition of loading problems is possible at an early point of time and appropriate correction can be triggered prior to the occurrence of additional loading problems.

In a vehicle according to a twenty-second additional aspect which depends on the twenty-first additional aspect, the means for executing the loading pattern is able to attempt correction of load placement in the case of improper load placement or a problem with inserting a load and is configured in such a manner that if correction fails, failure of correction is able to be communicated to a server or to a supervising fleet management system. This attempt of correction avoids the transfer of unnecessary information and enables an autonomous operation of the vehicle as long as possible and useful.

In a vehicle according to a twenty-third additional aspect which depends on the twenty-first or twenty-second additional aspect, the at least one 3D range or optical camera is actuatable or retractable in order to change the view point on the carried load and/or an adjacent load while executing the loading task. This allow a look even from the side of the vehicle to determine possible collision points and to prevent collision in the case that the load is not properly shaped, tilted, or shifted in relation to the pallet it is placed on.

The reverse operation, i.e. unloading, can be done with the same sensors and the same approach as specified above. However, the transport system wouldn't be scanned by an AGV/AMR while transporting the first load, it needs to be empty, but it is scanned the same way. The loading pattern can be known, e.g. received from the server prior to starting the unloading operation, or needs to be recognized or inferred, in which case it is also generated. All other steps are the same. The corners of the perimeter are identified, when the pattern comes from the server or is inferred, it is rotated around a corner as described already to fit the perimeter of the transport, and the now unloading plan containing exactly the same information (set of trajectories and final positions and orientations to be reached) is generated. It is now inverted - the loads are moved from the transport system and not into the transport system.

These circumstances are reflected in the following vehicle according to a twenty-fourth additional aspect which is able to automatically transport, preferably for unloading, at least two loads from an operating area in which the at least two loads are already placed in corresponding loading areas, to a load destination area, wherein the vehicle comprises: means for obtaining information at least about the load destination area, about the amount and the dimensions of the loads to be transported, and about the loading areas, means for scanning or obtaining information on the loading area to identify at least the space dimensions of the loading area, means for generating a loading pattern for the transport of the at least two loads from the loading areas to the destination area, wherein the loading pattern includes target positions and target orientations of the vehicle to be sequentially reached, and means for executing the loading pattern to automatically transport the at least two loads to the destination area until completion of the loading task.

According to a twenty-fifth additional aspect, a method for automatically controlling a vehicle to transport at least two loads from an operating area in which the at least two loads are already placed in corresponding loading areas to a load destination area, wherein the method comprises the steps of obtaining information at least about the load destination area, about the amount and the dimensions of the loads to be transported, and about the loading areas, scanning or obtaining information on the operating area to identify at least the space dimensions of the loading areas, generating a loading pattern for the transport of the at least two loads from the loading areas to the destination area, wherein the loading pattern includes target positions and target orientations of the vehicle to be sequentially reached, executing the loading pattern to automatically transport the at least two loads to the destination area until completion of the loading task.

### Brief description of the drawings

With reference to the accompanying drawings and corresponding detailed description, the forgoing object of the present invention is described more in detail together with its other objects, features and advantages.
Fig. 1A shows an automated guided vehicle (AGV) with a sensor kit according to the present invention in perspective view and Fig. 1B shows a computing unit of the AGV to which sensors are connected.
Fig. 2 shows a range finders field of view and measurements overlays in the lower area of the vehicle of Fig. 1 according to a second embodiment.
Fig. 3 shows possible scenarios for pick-up and drop-off areas.
Fig. 4A and 4B show an operational area having a virtual boundary within which loading areas are defined.
Fig. 5A and 5B show a method for controlling an AGV according to the present invention.
Fig. 6A and 6B shows an automated guided vehicle (AGV) with a sensor kit according to the present invention in perspective view and side view according to a third embodiment.
Fig. 7 shows an automated guided vehicle (AGV) with a sensor kit according to a fourth embodiment of the present invention in perspective view.
Fig. 8 shows possible scenarios for pick-up and drop-off areas.

### Detailed description of the invention

The invention resides in an automated loading of material/goods inside a truck or a container when entering the transporter's area. Instead of a truck or container other freight transport means like trailers or railway wagons might be used. Usually the lifting vehicle (often a forklift but also a different type of automated transport platform) for the materials or goods has access through the rear side, e.g. a truck docked to a gate, in order to densely load the goods. In another aspect of the invention, a trailer or railway wagon might be docked to a gate or platform. The lifting vehicles are preferable of the same width as the loading goods/materials or narrower. The invention also covers the reverse operation, i.e. the unloading operation, under the same conditions. The approach allows using already existing transport platforms through a sensor kit integration (retrofitting) as well as automated lifting platforms which are specially designed for such applications. Instead of transport platforms and lifting platforms, material handling platforms might be used.

The system comprises a vehicle equipped with forks or other mechanism to lift and transport goods, which are usually placed on a pallet or which are in other ways firmly fixed preferably in a rectangular prism shape. The vehicle is equipped with a sensory and computing equipment (sensor kit) comprising range and optical sensors which are located in different areas of the vehicle to sense the environment around for localizing the vehicle in the operating area and controlling the load placing, and a computing unit for localization and navigation algorithms computation and server/fleet management system communication. Preferably, the vehicle is self-contained and doesn't require an external supervisor to control its operation or the installation of any external tracking sensor. The vehicle only receives the task order from a supervising system or a server and reports back on completion of the tasks or, if applicable, execution failures. In case of failures the vehicle can be manually controlled, including remote manual control.

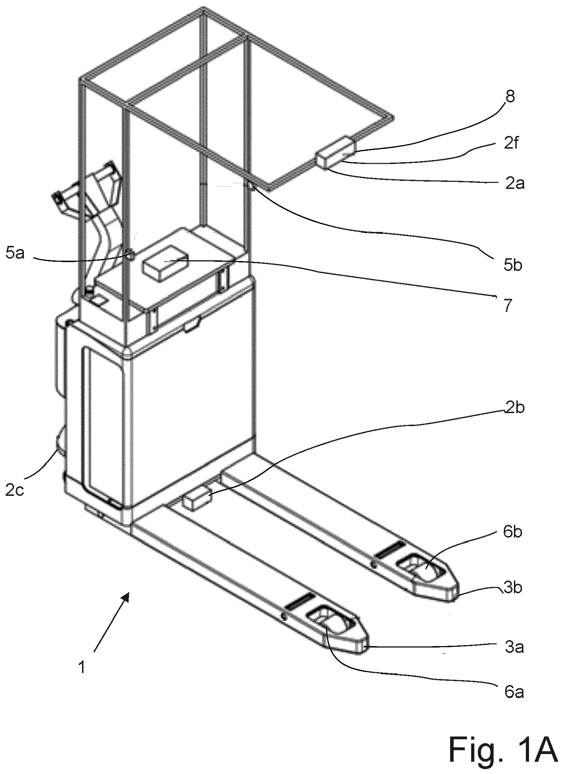

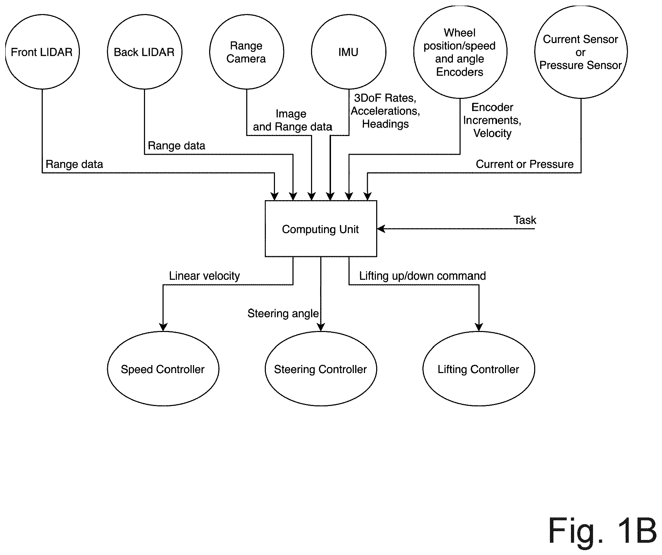

In the following, the first embodiment of the present invention is described with reference to Fig. 1. In order to safely navigate and sense the environment around the vehicle 1, range sensors 2a, 2b, 2c, which are preferably distance sensors, are installed in such a way to have a full coverage in both direction of travel of the vehicle 1. In order to cover the case that one sensor per direction cannot deliver the required field of view due to occlusions, multiple sensors with an overlap are used. The sensing technology does not affect the underlying control logic as long as a precision can be provided which is similar or better than LIDARs. Alternatively, sensors can be used with a precision which ensures safe navigation and required application accuracy. That means also cameras can be used as range sensors when range measurements or pose estimates which are derived through the image processing can meet the above-mentioned requirements.

Fig. 1B shows a computing unit of the AGV of the first embodiment to which sensors are connected. The computing unit and the sensors are part of an automation kit according to the present invention with which the following functions can be fulfilled:

For the minimal functional setup the following sensors are required:
1. Front and rear LIDARS.

Front LIDAR is the one located on the opposite side of the fork pair and used primarily for fast travelling without the load or when carrying the load on a long distance.

The rear LIDAR is located on the side of the fork pair above the load. It is primarily used in the loading operation when entering the truck or container with the load.

Both LIDARs complement each other to improve the pose estimate of the vehicle in the operating area.

Both LIDARs can be 2D or 3D, or substituted by other sensors capable of delivering range data in the quality similar to 2D or 3D LIDARs.

In another embodiment where safety regulations require that there could be one or pair rear facing LIDARs installed under the forks to ensure an unobstructed view when transporting the load. Alternatively, LIDARs can be installed above the load with an angle to the ground (2b). They are not required for the transport loading functionality but rather for traveling with the load/forks forward when other AGVs or humans are operating in the area.

2. Range camera also known as RGB-D camera is a device delivering an optical image data as well as associated with the image pixels dense distance measurements. The camera is primarily used to monitor the load placement, namely to measure the gap between the load on the forks and the adjacent loads in the transport. Moreover, the camera might be used to identify the shape of the load and to measure the remaining gap between the loads after placement.

The camera is oriented in such a way to ensure a clear view of the end of the load on the forks and the adjacent objects. Depending on the type of the automated vehicle being used, it can placed in a fixed location or be actuated, e.g., extended to a side of the vehicle when there is a space on the side(s) and removed to safe position when the vehicle is operating closely to walls of the transport (7a, 7b). It has a field of view wide enough to see the area in front of the vehicle in the forks direction to identify geometrical properties of the vehicle like the edges of the floor and of the walls and places of their connections. Even when the walls are not present, it is possible to identify the edges of the platform to aid in planning and pose calculation.

In another embodiment the Range Camera can be replaced by a pair of optical cameras (aka stereo pair) which provides a possibility to algorithmically derive the range data well known in the art. Alternatively, said pair of cameras can be a single camera with a distance sensor measuring the distance from the camera to the load to identify the scale and derive the range data also known in the art. There can also be provided a pair of cameras, e.g. for each side of the automated vehicle with or without a distance sensor.

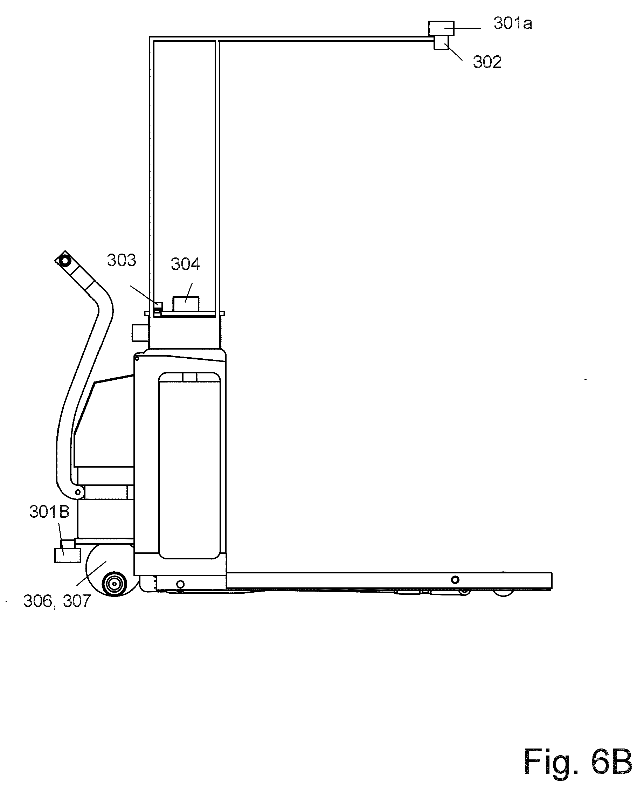

3. IMU - Inertial Measurement Unit 303 (see Fig. 6B) combining gyroscopes and accelerometers and often magnetic sensors in 3 degrees of freedom each. The IMU is used in the sensor fusion algorithm to improve the pose estimate of the vehicle in the environment.

4. Wheel and steering encoders are usually part of the system when automating commercial vehicles. If they are not present, they need to be installed. The wheel encoder normally is providing increment ticks which are increasing or decreasing depending on the direction of travel. The ticks can be translated to velocities given the encoder resolution and the wheel diameter. The steering encoder is also providing either absolute incremental ticks or another signal that can be translated into absolute steering angle of the steering wheel. Absolute means that the data can always be translated into the steering angle even if the system was shut down.

5. Current sensor is used to detect overloading of the system when the load on the forks contacts another load or the wall of the transporter. Very importantly, it allows also to detect the cases when the load is stuck when trying to place the load into a proper position. Current sensors are usually part of the vehicles and are normally present in the system either directly or indirectly through RMS measurements of the drive motor phase currents by the drive controllers.

In another embodiment when measuring the driving motor currents for technical reasons is not possible, a pressure sensor between the load and the vehicle on forks can be installed for the same purpose measuring increase of pressure when the load is contacting an obstacle or is stuck.

6. To propel the vehicle the guiding system computes a desired velocity and communicates it in the signal understandable for the Speed Controller. Thus, linear velocity of the vehicle is controlled.

In another embodiment where a differential drive system is used with two independently driven wheels, the desired velocities are computed and communicated to the corresponding velocity controllers thus controlling both linear and angular velocities of the vehicle.

7. To steer the vehicle with the steering wheel the guiding system computes and communicates in the signal understandable for the Steering Controller the desired steering angle thus controlling the angular velocity of the vehicle.

8. To pick up and place the load the guiding system computes and communicates in the signal understandable for the Lifting Controller lifting commands.

If the height of the forks needs to be measured for particular loading operations, a linear encoder or any other type of the sensor not shown in the illustration can be installed.

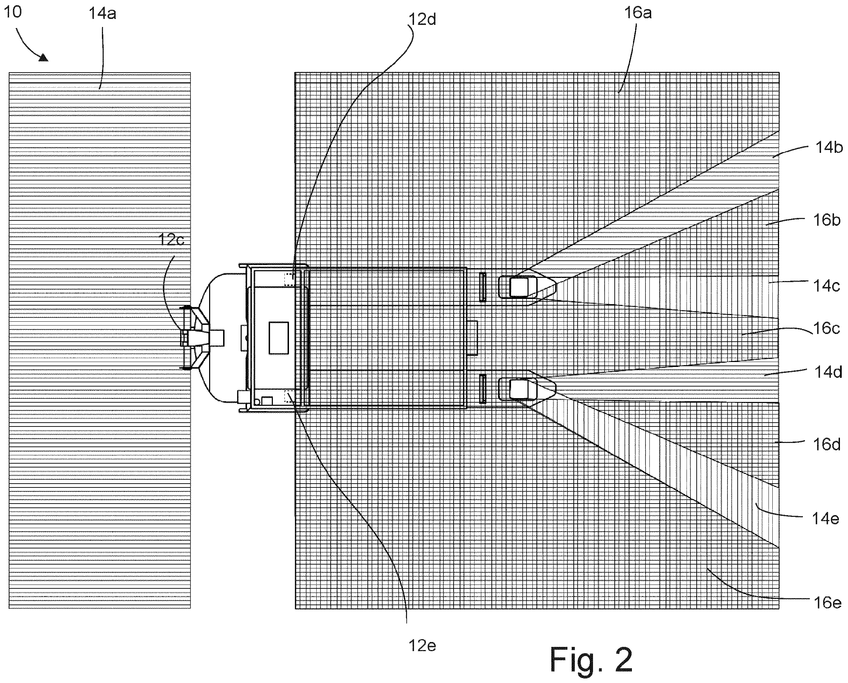

Fig. 2, which relates to a second embodiment of the present invention, illustrates the field of view coverage of range sensors 12c, 12e, 12d when the fork side sensors 12d and 12e, which are arranged on opposite sides of the vehicle 10, are facing an occlusion in the view direction. In order to cover the case that one sensor per direction cannot deliver the required field of view due to occlusions, multiple sensors with an overlap are used which is exemplified in Fig. 2 by sensors 12d and 12e which point in the same direction and which can be optional sensors for side distances. Here, it is important for safe navigation, that sensors 12d and 12e are installed in the lower location of the vehicle 10 at the wheels level while the sensors installed in the upper side serve more specific needs. Similar approach can be used for other sensor locations to achieve the same objective. The minimum vertical field of view that is required, is planar 2D, but can be extended to higher vertical angles when 3D range sensors or equivalent, e.g., RGBD cameras, are used.

Fig. 2 shows a range finders field of view 14a, 14b, 14c, 14d, 14e and measurements overlays 16a, 16b, 16c, 16d, 16e in the lower area of the vehicle of Fig. 1.

In the first embodiment, the range sensor 2a that is located at the upper side of the vehicle is placed in such a position that a view ahead is ensured when the load is placed on the vehicle 1. A range sensor similar to range sensor 2a of the first embodiment can also be installed in the second embodiment.

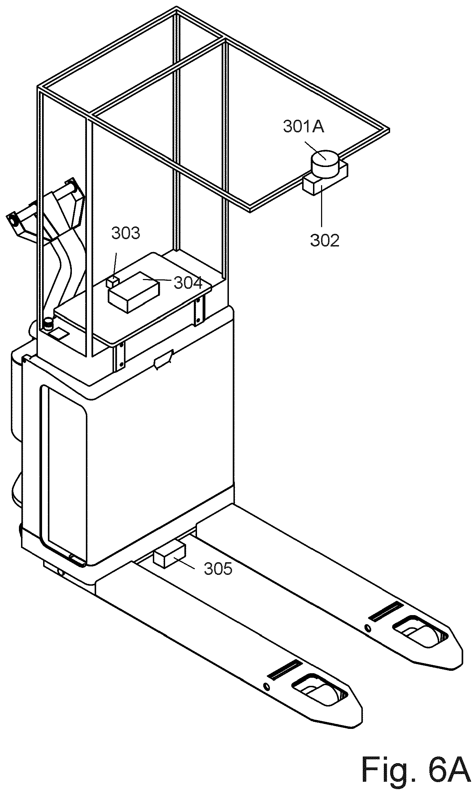

In case the range sensor 2a is 2D or doesn't have a sufficient vertical field of view, a tilting mechanism like that in the third embodiment of Fig. 6A and 6B can be provided to enable a sufficient vertical scan of the load placement and, when required to meet functional safety criteria, also vertical obstacles/objects detection when navigating with the load forward. Instead of or in addition to the tilt mechanism, an optical or a 3D range sensor like an RGBD or ToF (time of flight) camera (2f) can be used with a narrower field of view. This capability is beneficial to ensure that the load is placed correctly in the truck or container for loading operations and to identify the load placement and, if required, fork pockets and load formation when performing the pick-up or unloading task. The position at which the sensor is located above the load depends on the length and height of the load handled for the loading or unloading application and can be either manually or automatically adjusted.

The upper range sensor 2a of the first embodiment with an optional tilt mechanism doesn't have horizontal view occlusions at least in one horizontal plane. This means that the horizontal field of view is defined by the sensor characteristics and can normally reach up to 360 degrees. In this way, if the field of view is wide enough, a perfect auxiliary (secondary) localization sensor can be provided. Depending on the functional safety requirements, the upper sensor 2a can be used for an independent localization computation which is cross-checked at fixed time intervals against the main calculations. In case of a mismatch above a threshold an operation error can be issued.

When entering the container or a truck with a vehicle according to the first embodiment, the upper range sensor 2a is a primary sensor for a precise localization inside the truck/container area. The placement of the sensor 2a at the level above the height of the container's load ensures an unobstructed view of the perimeter of the inner space of the container. To ensure that loads of different heights can be handled, the sensor 2a is preferably placed at the maximum height allowed for entering inside the trucks or containers, which means a height normally not higher than 2.2 m.

To ensure a proper load/pallet placement on the forks or carrying platform an additional optical sensor 2f or a pair of sensors can be installed at the upper side. This sensor or pair of sensors installed in such a way that a full overview of the load from the top is ensured while avoiding an increase in the maximum allowed height described above.

If a fork mechanism is used with the vehicle 1 of the first embodiment for picking up pallets or a load, there are preferably two range/distance sensors 3a and 3b are provided in the lower side of the vehicle going under the load, e.g., at the end of the forks for a fork a lifting vehicle equipped with forks. The sensors 3a and 3b can be range-only, or can have a combination of optical technology and range/distance measuring technology. These range sensors 3a and 3b can have optionally a camera. An optical sensor adds the possibility to identify contours and openings (e.g, fork pockets) in a better way in addition to measuring the distance in relation to the approaching object.

In cases when the upper range sensor 2a, 2f of the first embodiment cannot deliver a sufficient precision for distance measurement to the sides of the container or a truck, auxiliary range/distance measurement sensors 5a and 5b can be installed on both sides of the lifting vehicle 1 within the vehicle's width dimensions. The sensors 5a and 5b are installed in such a way, that traveling along one of the sides of the container/truck delivers valid range measurements, even when the sides of the lifting vehicle are touching the walls of the container/truck.

In order to support the global pose estimation of the vehicle, i.e. in the coordinates of the operating space, wherein pose relates to position and orientation, additional sensors like wheel encoders 6a, 6b, and IMU 7 are used. Information of these sensors 6a, 6b, and 7, when fused together, deliver locally consistent pose estimate, preferably in the robot's coordinate frame that can be translated to the desired global frame. The sensors 6a and 6b are preferably wheel encoders which are be integrated with the wheels. Alternatively, separated wheels with encoders which are attached to the vehicle's body, can be provided. In case the vehicle has a combined steering and propelling wheel and there are no strict safety requirements demanding redundant wheel encoders, the sensors 6a and 6b can be omitted and the steering and wheel encoders like those 306, 307 shown in the alternative embodiment in the Fig. 6B can be used instead.

This pose estimate drifts over time but is corrected by the global pose estimate. The sensors 6a and 6b can be optical or magnetic encoders, preferably on both sides of the vehicle 1, and the sensor 7 is an IMU (Inertial Measurement Unit), which can be integrated in the computing module or located in other convenient position of the vehicle 1 of the first or second embodiment.

The vehicle maintains its position and its orientation, i.e. localizes itself in the operating environment, with the help of the onboard range sensors 2a, 2b, 2c, or equivalent sensors, optical or magnetic encoders 6a and 6b and IMU 7. The IMU can be placed in any part of the vehicle, including the computing module.

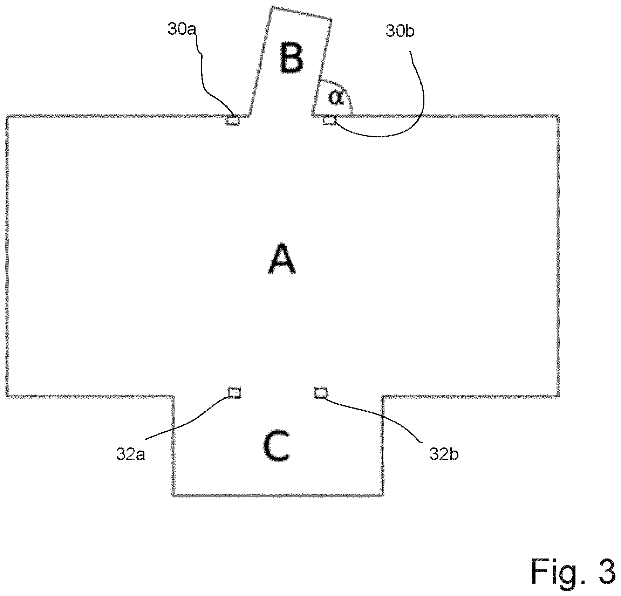

The internal representation of the environment (map) is either loaded from a server or acquired during the operation preparation process. The operational area is virtually subdivided into several sectors imposing different precision requirements for maintaining localization and position. The largest area which is shown in Fig. 3 is marked with (A) and is a general operation area having general operation precision requirements for automated vehicles.

The Areas (B) and (C) of Fig. 3 are areas with increased precision requirements. These areas (B) and (C) are pick-up (unloading) areas and drop-off (loading) areas. There is no principle difference between the areas (B) and (C) as they are interchangeable in dependence on the task, e.g. in dependence on whether loading or unloading operations are executed.

One preferred principle is that a load needs to be precisely picked up from one place and precisely placed at another one. The area (B) in Fig. 3 is the container or the truck area, where angle (α) demonstrates that the truck at the loading gate or the container at the container loading location is not located strictly perpendicular to the walls/door of the gate. When the map is created, the gates are normally closed, so it might be helpful to know the angle (α) in addition to the container or truck dimensions. However, the first embodiment is not restricted on knowing the angle(α).

When the loading or unloading operations are performed with long-distance transporting vehicles that are docked at gates, the gates coordinates are a-priori known. As a result it is sufficient to estimate the angle (α), if it exists, lateral offset, and the width and length of the container/truck. In fact, the list of container/truck lengths and widths is usually also a priori known so that only a match needs to be found. When a container is placed not at gates, the X and Y coordinates need to be additionally provided or established, but in most of the cases the X and Y coordinates are a priori known or, if necessary, an offset can be automatically identified. At all times, if no match can be found, the container/truck area can be mapped and a virtual boundary 110 imposed to strictly define the operating boundaries, even in the absence of one or more walls.

To ensure the required precision for localization and navigation can be reached in the (B) or (C) areas, special pose synchronization markers 30a, 30b for area (B) and 32a, 32b for area (C) can be installed on the floor or the walls close to the entry point to those areas. These markers 30a, 30b and 32a, 32b are preferably visual markers which can be square fiducial markers, as shown for instance in S. Garrido-Jurado, R. Muñoz-Salinas, F. J. Madrid-Cuevas, and M. J. Marín-Jiménez. 2014. "Automatic generation and detection of highly reliable fiducial markers under occlusion". Pattern Recogn. 47, 6 (June 2014), 2280-2292. DOI=10.1016/j.patcog.2014.01.005, and in ArUco: a minimal library for Augmented Reality applications based on OpenCV, http://www.uco.es/investiga/grupos/ava/node/26. Alternatively, other markers can be used which allow relative pose estimation of the vehicle (coordinates X, Y and orientation) through an image processing algorithm.

The location of the markers in the global operating coordinate frame is known to the vehicle's system. For detecting the markers 30a, 30b and/or 32a, 32b, a camera 8 can be used if the markers are installed on the floor close to the areas (B) and/or (C). Alternatively, cameras can be installed at locations of the vehicle 1 which allow easy detection of the markers 30a, 30b and/or 32a, 32b. If cameras are used in combinations with range sensors 3a, 3b, a detection of markers on walls may also be possible without installing additional cameras.

Subsequently, the loading and unloading operations are described more in detail.

The loading operation begins with a task order retrieved from the server or from the fleet management system. The other information are those about pick up locations, the amount and the dimensions of the goods/materials to be loaded, and the loading gate number or container location. Prior to starting the loading operation, the container or the truck at the gate is automatically scanned to identify the space dimensions and, optionally, the angle (α) and offset. Based on the identified container/truck dimensions and the goods/materials dimensions and their quantity a loading pattern, i.e. a plan, is generated. The total plan is a list of sub-plans, preferably in form of trajectories, for each individual load to be carried from the pick-up location to the appropriate location in the truck or container based on the generated loading pattern. Each sub-plan is a set of points describing target position and orientation of the vehicle, i.e. a set of poses, to be sequentially reached. Proceeding each sub-plan execution, pick-up actions are defined. Each sub-plan ends with a drop-off action. The overall plan execution is managed by a task managing algorithm and failures are reported to the server or a fleet management system and, if possible, recovery behaviors are executed. On completion of the loading task the vehicle reports the execution success and navigates to a defined waiting location.

In case of navigation inside the confined space with increased precision requirements (B) like inside a container or a truck, the upper located range sensor 2a of the first embodiment is used for calculating a precise relative position based on the container's/track's known geometry. In case a 3D range camera is installed instead of or in addition to the tilt mechanism for sensor 2a as described above, this 3D range camera can be used as an auxiliary sensor to aid such precise local estimate. The local estimate is then translated to the global frame for the proper loading plan execution.

Each load placement inside the container or the truck is verified after each drop-off/placement operation with the help of the upper range sensor 2a of the first embodiment with a tilting mechanism or a 3D range camera installed instead of or in addition to the tilting mechanism. In case of an improper load placement, a correction is attempted. If the correction fails, the loading task is paused and the respected failure is communicated to the server or to the supervising fleet management system. A manual correction can be attempted, after which the loading plan can be resumed with the next load in the list.

During the plan execution the area on the direction of travel is monitored with respect to the presence of obstacles. If the obstacle appears in the area of possible collision, the plan execution is paused. If the obstacle doesn't disappear over a defined period of time and is static, re-planning is attempted. If re-planning fails or the new plan, e.g. trajectories, cannot be precisely followed, the loading operation is stopped, and the failure is reported.

The unloading operation begins in a similar way as the loading operation with a task order received from the server or the fleet management system and containing the information about the unloading gate number or container location, information about the load, including the amount and dimensions, and the drop-off locations. The truck or the container is scanned in order to, if applicable find the angle (α) and offset, and verify the inner space dimension. The load is then scanned with the help of the upper range sensor 2a and the tilt mechanism or a 3D range camera 2f installed instead of it or in addition to it. A placement recognition algorithm identifies the load placement based on the range and/or additional image data and compares this load placement with the information received from the server. Then the vehicle calculates the unloading plan for instance consisting of sub-plans constituting transporting trajectories for each individual load as described in the loading operation above.

In Fig. 3 the areas B and C have been shown as interchangeable pick-up (unloading) area and drop off (loading) area.

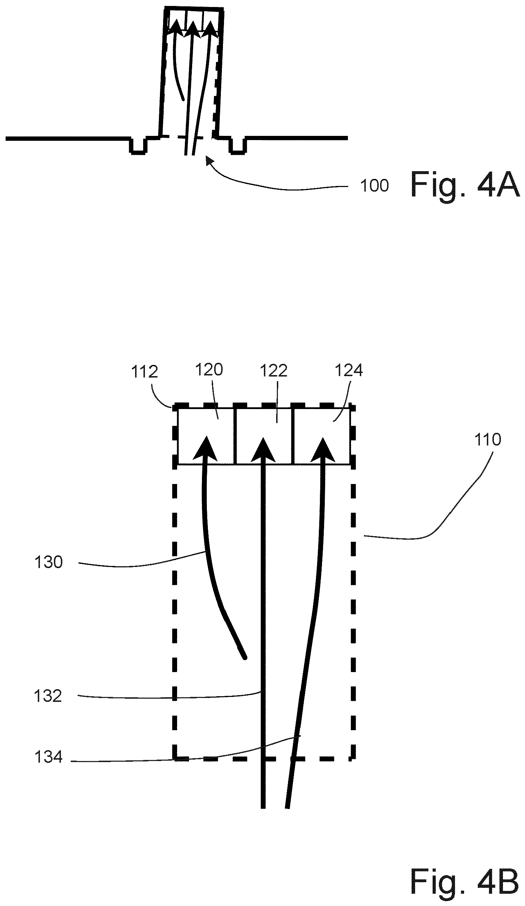

In Fig. 4A and Fig. 4B a loading area 100 with a virtual boundary 110 is shown. The virtual boundary 110 shows the border on which loads can be placed. In this example, a first row with three columns is shown. This means that loading areas 120, 122 and 124 are defined side-by-side and in such a manner that appropriate loads can be placed by an automatic guided vehicle (AGV) according to the invention. The loading areas 120, 122 and 124 are defined close to the front part 112 of the virtual boundary 110 and are preferably defined in such a manner that they extend over the whole front part 112.

For transporting loads to the respective loading areas 120, 122 and 124 trajectories 130, 132 and 134 are shown in Fig. 4B. These trajectories enable the AGV according to the present invention to place the loads on the loading areas 120, 122 and 124.

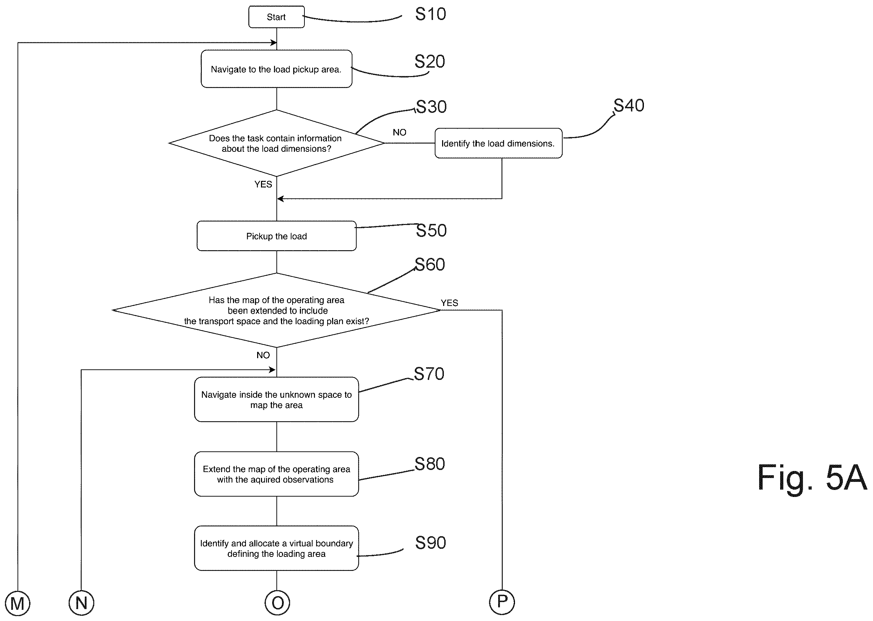

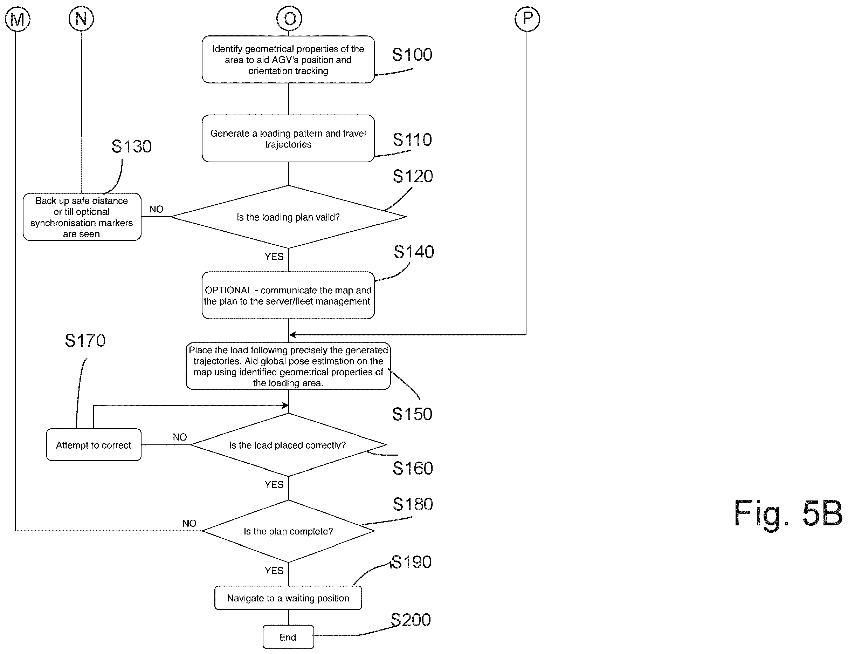

One example for a method for controlling an AGV to transport loads from a load pick-up area to an operating area on which the at least two loads are to be placed is shown in Fig. 5. This method is executed in the following manner:
After starting the method in step S10 the AGV navigates to a load pick-up area (step S20). When the AGV is in the load pick-up area the AGV verifies whether the task to pick up and transport to an operation area contains information about the load dimension (step S30). In the case that the task does not contain information about the load dimension, the load dimensions in the load pick-up area are identified in step S40 and the method continues with step S50. In the case that the task contains information about the load dimension, the method immediately goes to step S50. In this step S50 the AGV picks up the load. Subsequently, the load is transportable by the AGV.

In the next step S60 it is verified whether the map of the operating area has been extended to include the transport space and it is also verified whether a loading plan exists. In the case that it has been decided in step S60 that the map of the operating area has been extended to include the transport space and that also a loading plan exists, the method goes to step S150. In the case that the map of the operating area has not been extended to include the transport space or that the loading plan does not exist, the method goes to step S70 in which the AGV receives the task to navigate inside the unknown space to map the area. In other words, the AGV navigates in the operating area on which the loads are to be placed in order to get a map of the area.

In the subsequent step S80 the map of the operating area is extended with the acquired observations and in step S90 the virtual boundary which defines a loading area is identified and allocated. In the subsequent step S100 the geometrical properties of the area to assist tracking of the position of the AGV or the orientation of the AGV are identified and in the subsequent step S110 a loading pattern and travel trajectories are generated which enable the AGV to transport loads from the pick-up area to the loading area.

In the subsequent step S120 it is verified whether the loading plan is valid since it is not possible with an invalid loading plan to load a loading area with the loads in an efficient manner.

If the verification in step S120 indicates that the loading plan is not valid, a backup of the safe distance is generated or it is moved back till optional synchronisation markers of the loading area can be seen, e.g., synchronization markers 30a and 30b of Fig. 3. After step S130 it is jumped back prior to step S70 and the mapping process of the area is repeated with steps S70 through S 110.

After step S120 there is an optional step 140 in which the generated map and the plan can be communicated to the server of the fleet management in order to have the status available for future operation or other vehicles. Alternatively, the method can also go immediately from step S120 to step S150.

After step S120 or step S140, step S150 is executed in which the load from the load pick-up area is placed while following precisely the generated trajectories which are shown in Fig. 4B with reference signs 130, 132, 134 as an example. Global pose estimation is supported on the map while using the identified geometrical properties of the loading area.

After placing the load in step S150, it is estimated in step S160 whether the load is placed correctly. If this test of step S160 is negative, i.e. that the load is not placed correctly or got stuck, step S170 in which it is attempted to correct the load, is executed.

If the result of step S160 is positive, it is estimated in step S180 whether the plan has been completely executed. In the case that the plan has not been completely executed the method goes from step S180 back before step S20 so that the AGV is able to pick up the next load in the pick-up area.

If at the end of step S180 it turns out that the plan has been completed, the AGV navigates in step S190 to a waiting position and the procedure ends in step S200.

With this method an AGV is able to transport loads from a pick-up area to the loading area within the virtual boundaries in an efficient manner and in an automatic way.

The control which has to be added to existing automatic guided vehicles can be a control which is able to be connected to existing sensors of the automatic guided vehicle or can bring its own sensors which can be added to existing automatic guided vehicles or non-automatic ones in order to enable the automatic and non-automatic guided vehicles to execute the method of the present invention.

Alternatively, an operator for controlling the automatic guided vehicle to transport loads from the load pick-up area to a loading area on which loads are to be placed can have all devices and means which are necessary to execute the method already incorporated during manufacture.

The method steps shown in Fig. 5A and 5B can also be executed with a vehicle according to a third embodiment as shown in Fig. 6A and 6B. The vehicle as shown in Fig. 6B includes preferably a steering and drive mechanism that is used to propel and steer the AGV. In Fig. 6B, the steering and drive wheel are combined into one with passive castor support wheels on the sides next to the steering/drive wheel. Passive wheel on the forks support the vehicle during transporting the load, including when the forks are in the upper position.

Other embodiments could comprise separated steering and drive wheels as well as not-steerable individually controlled pair of drive wheels (differential drive) with passive support wheels. The drive and steer wheels are coupled with a guidance system comprising of sensors, computing module, and control interfaces and is used to propel and steer the AGV as well as to move the lifting mechanism, preferably comprising of a pair of forks. The sensors, computing module, and control interfaces are preferably those of Fig. 1B.

With respect to the method steps shown in Fig. 5A and 5B, the following information can be considered: In this loading algorithm, it is assumed that prior to starting the loading operation that the AGV has the map of the main operating area and is capable of localizing on it. By the "main operating area" the area excluding the truck/container space is meant. According to Fig. 3, these are areas A+C that are part of the general map that the AGV has, and B is unknown prior the loading operation. This area B is mapped during the loading operation, so that the general map is extended to include the area B. This understanding of "main operating area" is different from the term "operating area" which can also have the meaning of truck/container inner space.

By the term "localizing" it is meant the capability of computing and continuously updating the vehicle's current position and orientation (referred also as pose) relative to the map of the area (global pose estimate). The vehicle is also capable of precisely following trajectories provided by the planning system. Trajectories constitute the overall loading (and similar unloading) plan consisting of individual trajectories for picking up and placing each individual load. Each trajectory is a set of consecutive poses to be followed in order to reach the target/goal pose. For each trajectory (which can be also be called plan or subplan) the guiding system computes desired linear and angular velocities (or steering angle commands) in order to stay on track, i.e., to precisely follow the computed and provided trajectory.

The vehicle's localization system utilises information from multiple sensors in order to compute a current pose consensus. The main (also referred as global) sensors are the LIDARs 301A and 301B (or 2a, 2c of the first embodiment) in both direction of travel. The LIDARs are preferably 2D or 3D but the sensors 301A and 301B can be of other optical or frequency technology like cameras, sonars, or radars. The LIDAR 301A is preferably installed above the load. Optional LIDAR 305 (or 2b of the first embodiment) can be installed on the side of the load capturing mechanism under the load or under the forks when operating close to other AGVs or humans. The LIDAR 301B is preferably a 2D or 3D LIDAR in the direction opposite to the direction of travel and serves also as a safety sensor.

With reference sign 305, it is preferably indicated a front facing safety LIDAR which has to have a full (not occluded) view in the direction of travel. Alternatively, an overlaying pair of LIDARs can be used like shown in Fig. 2. If there are reduced safety requirements, these sensors may be excluded.

Local pose estimate (in the vehicles coordinate frame) is computed with the help of the IMU 303 and wheel and steering encoders 306, 307 and is fused with the global estimate to have a consistent drift-free global (in the map reference frame) pose estimate.

When the loading task is received, the AGV will follow to a known pick-up location to engage the load with a load capturing mechanism, that is preferably a pair of forks, and the load preferably has fork pockets. If the precision of the load pick-up position cannot be ensured or the dimensions are not communicated, the load is profiled with the camera 302 and the fork pockets are identified. After that, the AGV lowers the elevator mechanism and engages with the load. Once the load is captured, the elevator mechanism is raised to allow the further load transportation and placement in the transport or container.

If the information about the transport is not yet obtained (no map of the inner space) and the loading plan (loading pattern) is not yet generated, the AGV attempts to enter the transport keeping safe distances to the walls or to the end of the platform. During this initial normally slowly entering process the map updating process is enabled and the observations from the LIDAR 301A as well as from the camera 302 are incorporated into the main operational map. The camera 302 has a purpose to verify the load placement and can be located anywhere in the upper area to have the best view in relation to the operational area. The camera 302 can be a single range camera (aka RGB-D or 3D), two cameras constituting a stereo pair, or only one camera with an optional down facing distance sensor to obtain the scale. The camera 302 can be also located at the same place where the upper LIDAR and/or tilt unit. Instead of the 3D camera a tilt unit or combination of a tilt unit with a 2D or 3D camera can be provided.

It may require a travel of few tens of centimetres to a meter or two inside the transport to accumulate enough information and to extend the map, preferably a few tens of centimetres after overcoming the loading ramp connecting the bay/operational hall area and the transport or container. During this step also geometrical properties (also called features) are identified like the floor border, the walls and their intersections that are used to aid the local pose estimate inside the transport.

After the map is extended, the loading area is augmented with a virtual boundary and the loading pattern (loading plan) is generated. The vehicle continues with placing moving the load to the goal position based on the generated loading trajectory. Once the goal position is reached and verified to be below a distance threshold between the adjacent loads or the walls, the AGV lowers the elevator mechanism to place the load. After that, the AGV follows the loading plan with the next load and so forth till the plan is complete.

During the load placement operation, it can happen that the desired distance threshold cannot be achieved because of improper form of the load or other reasons. The guiding system monitors in addition the currents of the drive motor, or if the current sensor installation is not possible, then pressure sensor between the load and the vehicle, to identify the cases of contacting the load to other loads or the walls. If the threshold is not reached, the vehicle is attempting to reach the goal pose, but the current or pressure sensor are communicating a high increase in value, that is interpreted as a load stuck case and a correction action is attempted.

In addition, if during the map extension step with a new transport the loading plan cannot be generated due to invalidity of the map, unexpected objects in the transport, or mismatch of the load to the transport dimensions in the desired load capacity, the loading task is cancelled and the AGV backs up from the transport. Based on the error case, manual intervention may be required or the vehicle can attempt to repeat the transport area mapping process.

Independent on the loading plan, including the first step of obtaining the map or the perimeter of the transport, the AGV is aware of the obstacles around it and will react accordingly depending on the dynamics of those obstacles by either re-planning a path/trajectory around it for static objects or waiting till the path is clear for dynamic ones.

Therefore, it is also safe for the AGV to enter the transport without having a prior information about its inner area.

In contrast to prior art document US 8,192,137 B2, which presented invention considers preferably a pallets density per row of maximum two that can be seen related to the fork-lift design. With their presented invention, it is possible to see the walls and profile the transport before entering it in order to estimate an offset and an angle from the expected transport arrangement at the gate.

The present invention is focusing on overcoming the limitations of the prior art for single pair forks AGVs or other AGVs capable of transporting a single load that are not equipped with side shifting mechanism and where the desired load placement can be in any arrangement, including rows of more than two loads. The present invention also addresses the problem of a stuck load during the load placement where the prior art would not be capable of identifying that case and would just place the load once the driving current or pressure increased.

Another significant difference of the present invention in comparison to the prior art is that it doesn't require directly identifying the offset and the angle of the transport placement prior to entering the transport. Natural existence of these parameters is only the reason/trigger for the map extension process step and virtual boundary computation, and not the algorithm's primary search objective. Although the presence of the walls of the transport would be advantages for the loading method according to the present invention, it is not a strict requirement and the method would work on a transport having even no walls at all, or at a transport placed not on a gate, but, e.g., a container placed on the ground in an operational area.

The solution proposed in the present invention can have an additional optical sensor that can sense and identify the contours of the platform, its scale, and the load placement in relation to the adjacent load, walls, or the virtual border in case of walls absence.

The range sensor installed above the load in the direction of forks is used to extend the map of the guiding system to the new transporter or container and supports in tracking the position and importantly the orientation of the AGV inside the transport during the loading operation.

In absence of the walls in the transport it may have a limited aiding support but in combination with the optical sensor and the second range sensor located on the other side the position and orientation tracking task can be performed without difficulties.

There is only a single guiding system which is used for the whole operation based on a natural navigation - a term well known in the art - and requires no special external equipment installation or environment modification. The said aiding in the position and orientation tracking is achieved through enabling an auxiliary input into the multi-sensor fusion method, which leads to increase of the overall pose estimate precision of the main guiding system inside the transport and does not require switching between different methods.

There could be difficult cases when on the way to entering the transport a localization error needs to be cancelled or ensured to be minimal. In this case optional optical markers can be installed on the way of entering the transport, e.g., on a wall of the gate or elsewhere, so that they can be easily seen without stopping or de-routing the AGV.

The main problem when properly arranging the load in the transport when the AGV doesn't have the side shifting mechanism is that in order to place the load tightly to a side wall or to another load when more than one load is placed in the row, especially, when more than two, the AGV needs to turn and travel towards the wall or the load and then turn straight again.

Quite often the load can be not perfectly formed, and such an operation can lead to a load being stuck or placed not close enough. Continuing the loading operation would lead to the situation when not all planned loads can be placed inside the transport or container.

Therefore, a method of detecting such situations, verifying the load placement, and having a correction step according to the present invention is helpful and such a solution is also proposed in the present invention.

In summary, with the present invention, it is possible to produce AGVs (Automatic Guided Vehicles) which are specifically designed for transport or container loading. Moreover, according to the present invention it is also possible to automate existing non-automated vehicles used for loading tasks by installing an automation kit. In this manner sensors and computing module are retrofit into the drive electronics of the vehicles to be able to control velocities, to steer the wheel(s), and to control the lifting mechanism of the AGV.

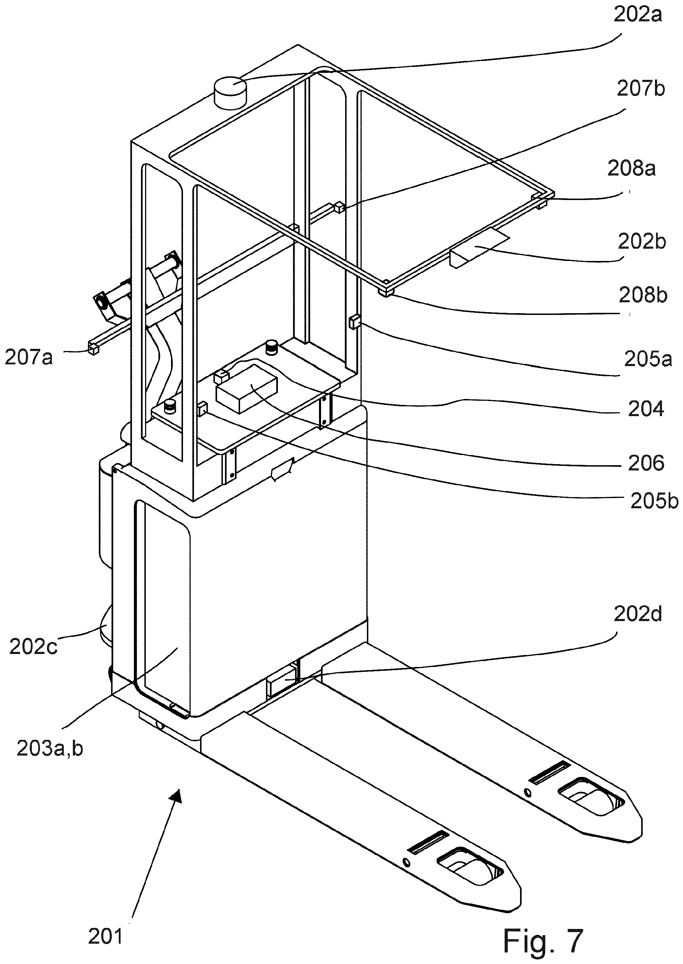

In the following, a fourth embodiment of the present invention is described with reference to Fig. 7. The fourth embodiment can use the feature of the first through third embodiments, preferably that of the first embodiment, wherein the following circumstances are additionally considered:
In order to safely navigate and sense the environment around the vehicle 201, range sensors 202a, 202b, and 202c and/or 202d, which are preferably distance sensors, are installed in such a way to have a full coverage in both direction of travel of the vehicle 201. In order to cover cases when one sensor per direction cannot deliver the required field of view due to occlusions, e.g., when safety standards require that, multiple sensors with an overlap can be used. The sensing technology does not affect the underlying control logic as long as precision can be provided which is similar or better than of LIDARs. Alternatively, sensors can be used with a precision, which ensures safe navigation and required application accuracy. That means also cameras can be used as range sensors when range measurements or pose estimates which are derived through the image processing can meet the above-mentioned requirements.

For the minimal functional setup in view of the fourth embodiment the following sensors are required:
Front and rear LIDARs

Front LIDAR (202c) is the one located on the opposite side of the fork pair and used primarily for fast travelling without the load or when carrying the load on a long distance.

The rear LIDAR (202a) is located on the side of the fork pair above the load. It is primarily used in the loading operation when entering the truck or container with the load.

Both LIDARs complement each other to improve the pose estimate of the vehicle in the operating area.

Both LIDARs can be 2D or 3D, or substituted by other sensors capable of delivering range data in the quality similar to 2D or 3D LIDARs.

In cases of reduced safety requirements or in combination with alternative safety sensors or measures it is also sufficient to have a single 2D or 3D LIDAR or equivalent sensor as long as the horizontal unobstructed field of view of the sensor is more or equal to 180 degrees in the direction of the forks.

The IMU 204 is used in the sensor fusion algorithm to improve the pose estimate of the vehicle in the environment.

Wheel and steering encoders 203a, 203b are usually part of the system when automating commercial vehicles.

To ensure a proper load presence on forks prior to lifting a load presence sensor is installed 205a, 205b. It can be a single sensor or a pair of sensors providing range or capacity measurements, or a binary logical signal of a secure load presence.

To propel the vehicle the guiding system on computing unit 206 computes desired velocities and communicates them in the signal understandable for the Speed Controller of the automated vehicle. Thus, linear velocity of the vehicle is controlled.

To ensure a proper load/pallet placement on the forks or carrying platform an additional optical sensor or a pair of sensors 208a, 208b can be installed at the upper side. This sensor or pair of sensors installed in such a way that a full overview of the load from the top is ensured while avoiding an increase in the maximum allowed height described above.

In order to support the global pose estimation of the automated vehicle, i.e. in the coordinates of the operating space (often referred as world coordinate frame or global frame), wherein pose relates to position and orientation, additional sensors like wheel encoders 203a, 203b, and IMU 204 are used. Information of these sensors 203a, 203b, and 204, when fused together, deliver locally consistent pose estimate, preferably in the robot's coordinate frame that can be translated to the desired global frame. The sensors 203a and 203b are preferably wheel encoders which are be integrated with the wheels (wheel and steering angle encoders or two wheel encoders depending on the kinematics of the vehicle). Alternatively, separated wheels with encoders, which are attached to the vehicle's body, can be provided.

This pose estimate drifts over time but is corrected by the global pose estimate. The sensors 203a and 203b can be optical or magnetic encoders, preferably on both sides of the vehicle 201 in case of differential drive kinematics, or on drive and steering motors in case of a tricycle or Ackermann kinematics, and the sensor 204 is an IMU (Inertial Measurement Unit), which can be integrated in the computing module or located in another convenient position of the vehicle 201.

The vehicle maintains its position and its orientation, i.e., localizes itself in the operating environment, with the help of the onboard range sensors 202a, 202b, 202c, 202d or equivalent sensors, optical or magnetic encoders 203a and 203b and IMU 204. The IMU can be placed in any part of the vehicle, including the computing module.

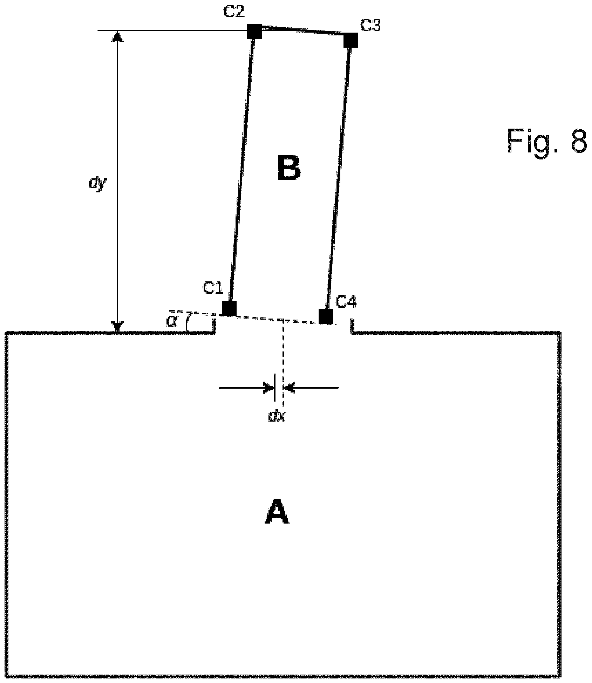

The internal representation of the environment (map) is either loaded from a server or acquired during the operation preparation process which is normally done once for every new environment to operate. The operational area consists of two parts - a known static area A (see Fig. 8) and a priori not known or not fully determined area B (Fig.8).

The area B in Fig. 8 is the transport's area (container, trailer, or a wagon), where angle α demonstrates that in this case a trailer at the loading gate or a container at the container loading location is not located strictly perpendicular to the walls/door of the gate. dx and dy denote lateral and longitudinal displacements from the expected transport position. Those variables describe the uncertainty about the exact location of the transport if some characteristics of the transport, like a list of expected dimensions, are known. The minimum requirement for the system to extend the operating area (map) towards the unknown area are the expected coordinates of the entry point of the transport, e.g., central location of a loading gate, expected entry coordinates of a container, or similar. In other words, the vehicle (AGV/AMR) needs to somehow come to the entry point in a position that allows observing the inner space of the transport with the installed on board sensors, dx, dy, and α displacements do not affect the mapping process.

At all times, if no match to a priori known information can be found, the transport's area can be mapped and a virtual boundary 110 in Fig. 4B imposed to strictly define the operating boundaries, even in the absence of one or more walls. The mapping process itself is a process of identifying the perimeter of the transport and its geometrical properties for proper loading pattern allocation. The process is normally performed once prior to entering the transport with the first load and the respected navigation information is updated, including appending the identified transport's area to the map. This is applicable to the first through fourth embodiments.

Now, it will be explained what the process of identifying the perimeter means and how it relates to the loading pattern generation based on Fig. 8.

Normally platforms of the transport system have a rectangular inner space where the transported load is placed. The best way to define the perimeter of the transport is through finding the, in this example, four corners C1-C4 through which lines can be drawn and thus a polygon defining the perimeter be drawn. This polygon is then added to the map of the pick-up area or at least to the map of the pick-up area used for planning enabling the vehicle to fully localize, plan, and navigate inside the transport.

The four corners allow also to fully determine the further geometrical properties of the transport system, as width, length, and the angle α, e.g., if the transport is docked not straight to the loading gate. These parameters are useful to plan the load placing pattern where the found angle α can be used to rotate the pattern around a pivot point which can be for example one of the four corners, e.g., C2, to fit the pattern properly to the orientation of the transport system. Further, the corners C1, C2 and C3, C4 defining virtual left and right walls of the transport platform allow planning and maintaining safe distances during loading and unloading operations.

In one example, the pattern computation is relative to the left upper corner C2 and the derived orientation α is used to rotate the pattern around the corner C2 to match the trailer orientation. In a further example any other of the corners C1-C4 can be used.

The precision of the operation will depend on how precisely those corners can be determined. Different filtering techniques can be used to ensure the corner locations are properly determined and reflect safely traversable areas. The transport system can have different structures on the walls or, one or more walls might be absent. Through different range or image data processing methods the walls or edges of the platform can be extracted, verified, e.g., on parallelism, or, even if not fully observed, intersections defining the corners can be found and further refined as more observations are coming.

Subsequently, the loading and unloading operations of the fourth embodiment are described more in detail.

The loading operation begins with a task order retrieved from the server or from the fleet management system. The other information are those about pick up locations, the amount and the dimensions of the goods/materials to be loaded, and the loading gate number, container location, or other transport entry coordinates. Prior to placing the first load, the transport is automatically scanned to identify the space dimensions, like mentioned above in relation to the corners C1, C2, C3 and C4, and, optionally, the angle α and dx, dy offsets. Based on the identified transport dimensions and the goods/materials dimensions and their quantity a loading pattern or plan, i.e., a full loading plan, is generated. The loading plan is a list of sub-plans, preferably in form of trajectories, for each individual load to be carried from the pick-up location to the appropriate location in the transport based on the generated loading pattern. Each sub-plan is a set of points describing target position and orientation of the vehicle, i.e., a set of poses, to be sequentially reached. Proceeding each sub-plan execution, application specific actions are defined, like pick-up, drop-off the loads, fully or partially lifting or lowering the forks, etc. Each sub-plan ends with a drop-off action. The overall plan execution is managed by a task managing algorithm and failures are reported to the server or a fleet management system and, if possible, recovery behaviors are executed. On completion of the loading task the vehicle reports the execution success and navigates to a defined waiting location.

Each load placement inside the transport is verified during and after each drop-off/placement operation with the help of the actuated 3D range or optical cameras 207a, 207b in a single or dual setup, optional cameras 208a and 208b, single or dual depending on the type of the load being handled, and optionally with the help of the upper range sensors 202a and 202b. In case of an improper load placement or problems with inserting a load, a correction is attempted. If the correction fails, the loading task is paused and the respected failure is communicated to the server or to the supervising fleet management system. A manual correction can be attempted, after which the loading plan can be resumed with the next load in the list.

Actuated 3D range or optical cameras, which might also include solid state LIDARs, 207a, 207b are located in such a position to have the best view point on the carried load and the adjacent loads during the placement process. Depending on the shape of the load, it may be required to extend the view point as humans would do, e.g., to look from the side to determine possible collision points and prevent the loads from colliding, especially when a load may be not properly shaped, tilted, or shifted in relation to the pallet it is placed on. Due to the specifics of the loading/unloading operation and due to performing tasks very close to the walls of the transport, it is not always possible to have fixed locations of such cameras at the vehicle. Therefore, actuated and/or optionally retractable cameras are usable wherein these cameras are able to extend the view point when it is required and possible and are able to retract back when they can possibly get be damaged.

During the plan execution the area on the direction of travel is monitored with respect to the presence of obstacles. If the obstacle appears in the area of possible collision, the plan execution is paused. If the obstacle doesn't disappear over a defined period of time and is static, re-planning is attempted. If re-planning fails or the new plan, e.g. trajectories, cannot be precisely followed, the loading operation is stopped, and the failure is reported.

The unloading operation begins in a similar way as the loading operation with a task order received from the server or the fleet management system and containing the information about the unloading gate number or transport location, information about the load, including the amount and dimensions, and the drop-off locations. The truck or the container is scanned in order to, if applicable find the angle α and offset, and verify the inner space dimension, or to identify the perimeter of the transport. The load is then scanned with the help of the upper range sensors 202a, 202b, actuated 207a and 207b sensors, and optionally with 208a and 208b cameras. A placement recognition algorithm identifies the load placement based on the range and/or additional image data and compares this load placement with the information received from the server. Then the vehicle calculates the unloading plan for instance consisting of sub-plans constituting transporting trajectories and actions for each individual load as described in the loading operation above.

In Fig. 8 the areas A and B have been shown as interchangeable pick-up (unloading) area and drop off (loading) area.

The range sensor installed above the load in the direction of forks is used to extend the map of the guiding system to the arrived transport and supports tracking the position and importantly the orientation of the AGV inside the transport during the loading operation which allows execution of complex navigational manoeuvres and trajectories planning considering all constrains of the transport space.

In absence of the walls in the transport it may have a limited aiding support but in combination with the optical sensor and the second range sensor located on the other side the position and orientation tracking task can be performed without difficulties.

There is only a single guiding system, which is used for the whole operation based on a natural navigation - a term well known in the art - and requires no special external equipment installation or environment modification. The said optional aiding in the position and orientation tracking is achieved through enabling an auxiliary input into the multi-sensor fusion method, which leads to increase of the overall pose estimate precision of the main guiding system inside the transport and does not require switching between different methods. Otherwise, the position and orientation are tracked not differently to operating in the main area.

### Reference signs

- 1: vehicle
- 2a,b,c: sensors
- 3a, 3b: sensors
- 5a, 5b: sensors
- 6a, 6b: sensors
- 7: sensor and computing unit

- 10: vehicle
- 12c,d,e: sensors
- 14a,b,c,d,e: range finders field of view
- 16a-e: measurements overlays

- (A), (B), (C): areas
- 30a, 30b: pose synchronization marker
- 32a, 32b: pose synchronization marker

- 100: loading area
- 110: virtual boundary
- 112: front part
- 130: trajectory
- 132: trajectory
- 134: trajectory

- 201: vehicle
- 202a,b,c,d: sensors
- 203a, 203b: sensors
- 204: sensors/IMU
- 205a, 205b: sensors
- 206: computing unit
- 207a, 207b: sensors
- 208a, 208b: sensors

- 301A,B: LIDAR
- 302: camera
- 303: IMU
- 304: computing unit
- 305: LIDAR
- 306,307: steering and wheel encoders

## Claims

1. Method for automatically controlling a vehicle to transport at least two loads from a load picking-up area to an operating area in which the at least two loads are to be placed in corresponding loading areas, wherein the method comprises the steps of
obtaining information at least about pick-up locations, about the amount and the dimensions of the loads to be transported,
scanning the operating area to identify at least the space dimensions of the loading areas,
generating a loading pattern for the transport of the at least two loads from the load picking-up area to the loading areas, wherein the loading pattern includes target positions and target orientations of the vehicle to be sequentially reached,
executing the loading pattern until completion of the loading task of transporting the at least two loads to the operating area,
wherein scanning the operating area includes obtaining information on at least three corners defining a polygon within which that at least two loads are to be placed and wherein the polygon of the operating area is added to the pick-up area prior to generating the loading pattern for the transport of the at least two loads from the load picking-up area to the loading areas,
wherein obtaining information on the at least three corners defining a polygon includes using a filtering technique for determining loading areas to which a traverse is possible with a predefined precision and wherein range or image data processing is used for determining at least one wall with respect to the polygon of the operating area in relation to which at least one of the at least two loads are to be placed.

2. Method according to claim 1, wherein prior to generating the loading pattern two corners of the polygon are used to determine a tilt (α) between the operating area and two points of the pick-up area and/or a two-dimensional shift (dx, dy) between the operating area and the pick-up area.

3. Method for automatically controlling a vehicle to transport at least two loads from a load picking-up area to an operating area in which the at least two loads are to be placed in corresponding loading areas, wherein the method comprises the steps of
obtaining information at least about pick-up locations, about the amount and the dimensions of the loads to be transported,
scanning the operating area to identify at least the space dimensions of the loading areas,
generating a loading pattern for the transport of the at least two loads from the load picking-up area to the loading areas, wherein the loading pattern includes target positions and target orientations of the vehicle to be sequentially reached,
executing the loading pattern until completion of the loading task of transporting the at least two loads to the operating area,
wherein scanning the operating area includes obtaining information on at least three corners defining a polygon within which that at least two loads are to be placed and wherein the polygon of the operating area is added to the pick-up area prior to generating the loading pattern for the transport of the at least two loads from the load picking-up area to the loading areas,
wherein prior to generating the loading pattern two corners of the polygon are used to determine a tilt (α) between the operating area and two points of the pick-up area and/or a two-dimensional shift (dx, dy) between the operating area and the pick-up area.

4. Method according to any of claims 1 through 3, wherein on completion of the loading task, success of the execution of the loading task is reported by the vehicle and the vehicle is navigated to a predefined waiting location.

5. Method according to any of claims 1 through 4, wherein, if a failure occurs during executing the loading pattern, a recovery behavior for correcting the failure is executed and, if correcting the failure fails, the failure is reported to a server or to a fleet management system.

6. Method according to any of claims 1 through 5, wherein the loading pattern contains sub-plans in form of trajectories wherein each sub-plan ends with a drop-off action with respect to a load.

7. Vehicle which is able to automatically transport at least two loads from a load picking-up area to an operating area in which the at least two loads are to be placed in corresponding loading areas, wherein the vehicle comprises:
means for obtaining information at least about pick-up locations, about the amount and the dimensions of the loads to be transported, and about the loading areas,
means for scanning the loading area to identify at least the space dimensions of the loading area,
means for generating a loading pattern for the transport of the at least two loads from the load picking-up area to the loading areas, wherein the loading pattern includes target positions and target orientations of the vehicle to be sequentially reached, and
means for executing the loading pattern to automatically transport the at least two loads to the operating area until completion of the loading task,
wherein the means for scanning is configured to obtain information on at least three corners defining a polygon within which that at least two loads are to be placed and wherein the polygon of the operating area is added to the pick-up area prior to generating the loading pattern for the transport of the at least two loads from the load picking-up area to the loading areas, and
wherein obtaining information on the at least three corners defining a polygon includes using a filtering technique for determining loading areas to which a traverse is possible with a predefined precision and wherein range or image data processing is used for determining at least one wall with respect to the polygon of the operating area in relation to which at least one of the at least two loads are to be placed.

8. Vehicle according to claim 7, wherein prior to generating the loading pattern two corners of the polygon are used to determine a tilt (α) between the operating area and two points of the pick-up area and/or a two-dimensional shift (dx, dy) between the operating area and the pick-up area.

9. Vehicle which is able to automatically transport at least two loads from a load picking-up area to an operating area in which the at least two loads are to be placed in corresponding loading areas, wherein the vehicle comprises:
means for obtaining information at least about pick-up locations, about the amount and the dimensions of the loads to be transported, and about the loading areas,
means for scanning the loading area to identify at least the space dimensions of the loading area,
means for generating a loading pattern for the transport of the at least two loads from the load picking-up area to the loading areas, wherein the loading pattern includes target positions and target orientations of the vehicle to be sequentially reached, and
means for executing the loading pattern to automatically transport the at least two loads to the operating area until completion of the loading task,
wherein the means for scanning is configured to obtain information on at least three corners defining a polygon within which that at least two loads are to be placed and wherein the polygon of the operating area is added to the pick-up area prior to generating the loading pattern for the transport of the at least two loads from the load picking-up area to the loading areas, and
wherein prior to generating the loading pattern two corners of the polygon are used to determine a tilt (α) between the operating area and two points of the pick-up area and/or a two-dimensional shift (dx, dy) between the operating area and the pick-up area.

10. Vehicle according to any of the claims 7 through 9, wherein the means for executing the loading pattern is able to recognize and improper load placement or a problem with inserting a load by the use of at least one 3D range or optical camera (207a, 207b).

11. Vehicle according to claim 10, wherein the means for executing the loading pattern is able to attempt correction of load placement in the case of improper load placement or a problem with inserting a load and is configured in such a manner that if correction fails, failure of correction is able to be communicated to a server or to a supervising fleet management system.

12. Vehicle according to claim 10 or 11, wherein the at least one 3D range or optical camera (207a, 207b) is actuatable or retractable in order to change the view point on the carried load and/or an adjacent load while executing the loading task.

## Patentansprüche

1. Verfahren zum automatischen Steuern eines Fahrzeugs, um mindestens zwei Lasten von einem Lastaufnahmebereich zu einem Betriebsbereich, in dem die mindestens zwei Lasten in entsprechenden Ladebereichen zu platzieren sind, zu transportieren, wobei das Verfahren die folgenden Schritte aufweist
Erhalten von Informationen mindestens über Aufnahmeorte, über die Menge und die Abmessungen der zu transportierenden Lasten,
Scannen des Betriebsbereichs, um mindestens die Raumabmessungen der Ladebereiche zu identifizieren,
Erzeugen eines Lademusters für den Transport der mindestens zwei Lasten von dem Lastaufnahmebereich zu den Ladebereichen, wobei das Lademuster Zielpositionen und Zielausrichtungen des Fahrzeugs, die fortlaufend zu erreichen sind, enthält,
Ausführen des Lademusters bis zu der Vervollständigung der Ladeaufgabe des Transports der mindestens zwei Lasten zu dem Betriebsbereich,
wobei das Scannen des Betriebsbereichs das Erhalten von Informationen über mindestens drei Ecken, die ein Polygon definieren, in dem die mindestens zwei Lasten zu platzieren sind, enthält und wobei vor dem Erzeugen des Lademusters für den Transport der mindestens zwei Lasten von dem Lastaufnahmebereich zu den Ladebereichen das Polygon des Betriebsbereichs zu dem Aufnahmebereich hinzugefügt wird,
wobei das Erhalten von Informationen über die mindestens drei Ecken, die ein Polygon definieren, das Verwenden einer Filtertechnik zum Bestimmen von Ladebereichen, zu denen ein Verfahren mit einer vordefinierten Genauigkeit möglich ist, enthält und wobei eine Bereichs- oder Bilddatenverarbeitung zum Bestimmen von mindestens einer Wand in Bezug auf das Polygon des Betriebsbereichs, in Bezug auf das mindestens eine der mindestens zwei Lasten zu platzieren ist, verwendet wird.

2. Verfahren nach Anspruch 1, wobei vor dem Erzeugen des Lademusters zwei Ecken des Polygons verwendet werden, um eine Neigung (α) zwischen dem Betriebsbereich und zwei Punkten des Aufnahmebereichs und/oder eine zweidimensionale Verschiebung (dx, dy) zwischen dem Betriebsbereich und dem Aufnahmebereich zu bestimmen.

3. Verfahren zum automatischen Steuern eines Fahrzeugs, um mindestens zwei Lasten von einem Lastaufnahmebereich zu einem Betriebsbereich, in dem die mindestens zwei Lasten in entsprechenden Ladebereichen zu platzieren sind, zu transportieren, wobei das Verfahren die folgenden Schritte aufweist
Erhalten von Informationen mindestens über Aufnahmeorte, über die Menge und die Abmessungen der zu transportierenden Lasten,
Scannen des Betriebsbereichs, um mindestens die Raumabmessungen der Ladebereiche zu identifizieren,
Erzeugen eines Lademusters für den Transport der mindestens zwei Lasten von dem Lastaufnahmebereich zu den Ladebereichen, wobei das Lademuster Zielpositionen und Zielausrichtungen des Fahrzeugs, die fortlaufend zu erreichen sind, enthält,
Ausführen des Lademusters bis zu der Vervollständigung der Ladeaufgabe des Transports der mindestens zwei Lasten zu dem Betriebsbereich,
wobei das Scannen des Betriebsbereichs das Erhalten von Informationen über mindestens drei Ecken, die ein Polygon definieren, in dem die mindestens zwei Lasten zu platzieren sind, enthält und wobei vor dem Erzeugen des Lademusters für den Transport der mindestens zwei Lasten von dem Lastaufnahmebereich zu den Ladebereichen das Polygon des Betriebsbereichs zu dem Aufnahmebereich hinzugefügt wird,
wobei vor dem Erzeugen des Lademusters zwei Ecken des Polygons verwendet werden, um eine Neigung (α) zwischen dem Betriebsbereich und zwei Punkten des Aufnahmebereichs und/oder eine zweidimensionale Verschiebung (dx, dy) zwischen dem Betriebsbereich und dem Aufnahmebereich zu bestimmen.

4. Verfahren nach einem der Ansprüche 1 bis 3, wobei bei Vervollständigung der Ladeaufgabe der Erfolg der Ausführung der Ladeaufgabe durch das Fahrzeug gemeldet wird und das Fahrzeug zu einem vordefinierten Warteort navigiert wird.

5. Verfahren nach einem der Ansprüche 1 bis 4, wobei, wenn ein Fehler während der Ausführung des Lademusters auftritt, ein Wiederherstellungsverhalten zum Korrigieren des Fehlers ausgeführt wird und, wenn das Korrigieren des Fehlers fehlschlägt, der Fehler an einen Server oder an ein Flottenmanagementsystem gemeldet wird.

6. Verfahren nach einem der Ansprüche 1 bis 5, wobei das Lademuster Teilpläne in Form von Trajektorien enthält, wobei jeder Teilplan mit einer Absetzaktion in Bezug auf eine Last endet.

7. Fahrzeug, das in der Lage ist, automatisch mindestens zwei Lasten von einem Lastaufnahmebereich zu einem Betriebsbereich, in dem die mindestens zwei Lasten in entsprechenden Ladebereichen zu platzieren sind, zu transportieren, wobei das Fahrzeug aufweist:
Mittel zum Erhalten von Informationen mindestens über Aufnahmeorte, über die Menge und die Abmessungen der zu transportierenden Lasten und über die Ladebereiche,
Mittel zum Scannen des Ladebereichs, um mindestens die Raumabmessungen des Ladebereichs zu identifizieren,
Mittel zum Erzeugen eines Lademusters für den Transport der mindestens zwei Lasten von dem Lastaufnahmebereich zu den Ladebereichen, wobei das Lademuster Zielpositionen und Zielausrichtungen des Fahrzeugs, die fortlaufend zu erreichen sind, enthält, und
Mittel zum Ausführen des Lademusters, um bis zu der Vervollständigung der Ladeaufgabe die mindestens zwei Lasten automatisch zu dem Betriebsbereich zu transportieren,
wobei das Mittel zum Scannen konfiguriert ist, um Informationen über mindestens drei Ecken, die ein Polygon definieren, in dem die mindestens zwei Lasten zu platzieren sind, zu erhalten, und wobei vor dem Erzeugen des Lademusters für den Transport der mindestens zwei Lasten von dem Lastaufnahmebereich zu den Ladebereichen das Polygon des Betriebsbereichs zu dem Aufnahmebereich hinzugefügt wird, und
wobei das Erhalten von Informationen über die mindestens drei Ecken, die ein Polygon definieren, das Verwenden einer Filtertechnik zum Bestimmen von Ladebereichen, zu denen ein Verfahren mit einer vordefinierten Genauigkeit möglich ist, enthält und wobei eine Bereichs- oder Bilddatenverarbeitung zum Bestimmen von mindestens einer Wand in Bezug auf das Polygon des Betriebsbereichs, in Bezug auf das mindestens eine der mindestens zwei Lasten zu platzieren ist, verwendet wird.

8. Fahrzeug nach Anspruch 7, wobei vor dem Erzeugen des Lademusters zwei Ecken des Polygons verwendet werden, um eine Neigung (α) zwischen dem Betriebsbereich und zwei Punkten des Aufnahmebereichs und/oder eine zweidimensionale Verschiebung (dx, dy) zwischen dem Betriebsbereich und dem Aufnahmebereich zu bestimmen.

9. Fahrzeug, das in der Lage ist, automatisch mindestens zwei Lasten von einem Lastaufnahmebereich zu einem Betriebsbereich, in dem die mindestens zwei Lasten in entsprechenden Ladebereichen zu platzieren sind, zu transportieren, wobei das Fahrzeug aufweist:
Mittel zum Erhalten von Informationen mindestens über Aufnahmeorte, über die Menge und die Abmessungen der zu transportierenden Lasten und über die Ladebereiche,
Mittel zum Scannen des Ladebereichs, um mindestens die Raumabmessungen des Ladebereichs zu identifizieren,
Mittel zum Erzeugen eines Lademusters für den Transport der mindestens zwei Lasten von dem Lastaufnahmebereich zu den Ladebereichen, wobei das Lademuster Zielpositionen und Zielausrichtungen des Fahrzeugs, die fortlaufend zu erreichen sind, enthält, und
Mittel zum Ausführen des Lademusters, um bis zu der Vervollständigung der Ladeaufgabe die mindestens zwei Lasten automatisch zu dem Betriebsbereich zu transportieren,
wobei das Mittel zum Scannen konfiguriert ist, um Informationen über mindestens drei Ecken, die ein Polygon definieren, in dem die mindestens zwei Lasten zu platzieren sind, zu erhalten, und wobei vor dem Erzeugen des Lademusters für den Transport der mindestens zwei Lasten von dem Lastaufnahmebereich zu den Ladebereichen das Polygon des Betriebsbereichs zu dem Aufnahmebereich hinzugefügt wird, und
wobei vor dem Erzeugen des Lademusters zwei Ecken des Polygons verwendet werden, um eine Neigung (α) zwischen dem Betriebsbereich und zwei Punkten des Aufnahmebereichs und/oder eine zweidimensionale Verschiebung (dx, dy) zwischen dem Betriebsbereich und dem Aufnahmebereich zu bestimmen.

10. Fahrzeug nach einem der Ansprüche 7 bis 9, wobei das Mittel zum Ausführen des Lademusters in der Lage ist, eine unzulässige Lastplatzierung oder ein Problem beim Einfügen einer Last durch die Verwendung von mindestens einer 3D-Entfernungsmessungs-Kamera oder optischen Kamera (207a, 207b) zu erkennen.

11. Fahrzeug nach Anspruch 10, wobei das Mittel zum Ausführen des Lademusters in der Lage ist, eine Korrektur der Lastplatzierung im Falle einer unzulässigen Lastplatzierung oder eines Problems beim Einfügen einer Last zu versuchen, und auf solche Weise konfiguriert ist, dass, wenn die Korrektur fehlschlägt, ein Fehler der Korrektur an einen Server oder an ein überwachendes Flottenmanagementsystem kommuniziert werden kann.

12. Fahrzeug nach Anspruch 10 oder 11, wobei die mindestens eine 3D-Entfernungsmessungs-Kamera oder optische Kamera (207a, 207b) betätigbar oder einziehbar ist, um während der Ausführung der Ladeaufgabe den Blickwinkel auf die getragene Last und/oder eine benachbarte Last zu ändern.

## Revendications

1. Procédé pour commander automatiquement un véhicule pour transporter au moins deux charges depuis une zone de prélèvement de charges vers une zone opérationnelle dans laquelle les au moins deux charges doivent être placées dans des zones de chargement correspondantes, dans lequel le procédé comprend les étapes consistant à :
obtenir des informations concernant au moins des emplacements de prélèvement, concernant la quantité et les dimensions des charges à transporter,
balayer la zone opérationnelle pour identifier au moins les dimensions spatiales des zones de chargement,
générer un motif de chargement pour le transport des au moins deux charges depuis la zone de prélèvement de charges vers les zones de chargement, dans lequel le motif de chargement inclut des positions cibles et des orientations cibles du véhicule à atteindre de manière séquentielle,
exécuter le motif de chargement jusqu'à l'achèvement de la tâche de chargement consistant à transporter les au moins deux charges vers la zone opérationnelle,
dans lequel le balayage de la zone opérationnelle inclut l'obtention d'informations sur au moins trois coins définissant un polygone à l'intérieur duquel au moins deux charges doivent être placées et dans lequel le polygone de la zone opérationnelle est ajouté à la zone de prélèvement avant de générer le motif de chargement pour le transport des au moins deux charges depuis la zone de prélèvement de charge vers les zones de chargement,
dans lequel l'obtention d'informations sur les au moins trois coins définissant un polygone inclut l'utilisation d'une technique de filtrage pour déterminer des zones de chargement vers lesquelles une traversée est possible avec une précision prédéfinie et dans lequel un traitement de données télémétriques ou d'image est utilisé pour déterminer au moins une paroi par rapport au polygone de la zone opérationnelle par rapport auquel au moins une des au moins deux charges doit être placée.

2. Procédé selon la revendication 1, dans lequel, avant de générer le motif de chargement, deux coins du polygone sont utilisés pour déterminer une inclinaison (α) entre la zone opérationnelle et deux points de la zone de prélèvement et/ou un décalage bidimensionnel (dx, dy) entre la zone opérationnelle et la zone de prélèvement.

3. Procédé pour commander automatiquement un véhicule pour transporter au moins deux charges depuis une zone de prélèvement de charges vers une zone opérationnelle dans laquelle les au moins deux charges doivent être placées dans des zones de chargement correspondantes, dans lequel le procédé comprend les étapes consistant à :
obtenir des informations concernant au moins les emplacements de prélèvement, concernant la quantité et les dimensions des charges à transporter,
balayer la zone opérationnelle pour identifier au moins les dimensions spatiales des zones de chargement,
générer un motif de chargement pour le transport des au moins deux charges depuis la zone de prélèvement de charges vers les zones de chargement, dans lequel le motif de chargement inclut des positions cibles et des orientations cibles du véhicule à atteindre de manière séquentielle,
exécuter le motif de chargement jusqu'à l'achèvement de la tâche de chargement consistant à transporter les au moins deux charges vers la zone opérationnelle,
dans lequel le balayage de la zone opérationnelle inclut l'obtention d'informations sur au moins trois coins définissant un polygone à l'intérieur duquel au moins deux charges doivent être placées et dans lequel le polygone de la zone opérationnelle est ajouté à la zone de prélèvement avant de générer le motif de chargement pour le transport des au moins deux charges depuis la zone de prélèvement de charge vers les zones de chargement,
dans lequel, avant de générer le motif de chargement, deux coins du polygone sont utilisés pour déterminer une inclinaison (α) entre la zone opérationnelle et deux points de la zone de prélèvement et/ou un décalage bidimensionnel (dx, dy) entre la zone opérationnelle et la zone de prélèvement.

4. Procédé selon l'une quelconque des revendications 1 à 3, dans lequel, à la fin de la tâche de chargement, le succès de l'exécution de la tâche de chargement est signalé par le véhicule et le véhicule est dirigé vers un emplacement d'attente prédéfini.

5. Procédé selon l'une quelconque des revendications 1 à 4, dans lequel, si une défaillance survient pendant l'exécution du motif de chargement, un comportement de récupération pour corriger la défaillance est exécuté et, si la correction de la défaillance échoue, la défaillance est signalée à un serveur ou à un système de gestion de flotte.

6. Procédé selon l'une quelconque des revendications 1 à 5, dans lequel le motif de chargement contient des sous-plans sous forme de trajectoires, dans lequel chaque sous-plan se termine par une action de livraison par rapport à une charge.

7. Véhicule qui peut transporter automatiquement au moins deux charges depuis une zone de prélèvement de charges vers une zone opérationnelle dans laquelle les au moins deux charges doivent être placées dans des zones de chargement correspondantes, dans lequel le véhicule comprend :
des moyens pour obtenir des informations concernant au moins les emplacements de prélèvement, concernant la quantité et les dimensions des charges à transporter et concernant les zones de chargement,
des moyens pour balayer la zone de chargement pour identifier au moins les dimensions spatiales de la zone de chargement,
des moyens pour générer un motif de chargement pour le transport des au moins deux charges depuis la zone de prélèvement de charges vers les zones de chargement, dans lequel le motif de chargement inclut des positions cibles et des orientations cibles du véhicule à atteindre de manière séquentielle, et
des moyens pour exécuter le motif de chargement pour transporter automatiquement les au moins deux charges vers la zone opérationnelle jusqu'à l'achèvement de la tâche de chargement,
dans lequel les moyens de balayage sont configurés pour obtenir des informations sur au moins trois coins définissant un polygone à l'intérieur duquel au moins deux charges doivent être placées et dans lequel le polygone de la zone opérationnelle est ajouté à la zone de prélèvement avant de générer le motif de chargement pour le transport des au moins deux charges depuis la zone de prélèvement de charges vers les zones de chargement, et
dans lequel l'obtention d'informations sur les au moins trois coins définissant un polygone inclut l'utilisation d'une technique de filtrage pour déterminer des zones de chargement vers lesquelles une traversée est possible avec une précision prédéfinie et dans lequel un traitement de données télémétriques ou d'image est utilisé pour déterminer au moins une paroi par rapport au polygone de la zone opérationnelle par rapport auquel au moins une des au moins deux charges doit être placée.

8. Véhicule selon la revendication 7, dans lequel, avant de générer le motif de chargement, deux coins du polygone sont utilisés pour déterminer une inclinaison (α) entre la zone opérationnelle et deux points de la zone de prélèvement et/ou un décalage bidimensionnel (dx, dy) entre la zone opérationnelle et la zone de prélèvement.

9. Véhicule qui peut transporter automatiquement au moins deux charges depuis une zone de prélèvement de charges vers une zone opérationnelle dans laquelle les au moins deux charges doivent être placées dans des zones de chargement correspondantes, dans lequel le véhicule comprend :
des moyens pour obtenir des informations concernant au moins les emplacements de prélèvement, concernant la quantité et les dimensions des charges à transporter, et concernant les zones de chargement,
des moyens pour balayer la zone de chargement pour identifier au moins les dimensions spatiales de la zone de chargement,
des moyens pour générer un motif de chargement pour le transport des au moins deux charges depuis la zone de prélèvement de charges vers les zones de chargement, dans lequel le motif de chargement inclut des positions cibles et des orientations cibles du véhicule à atteindre de manière séquentielle, et
des moyens pour exécuter le motif de chargement pour transporter automatiquement les au moins deux charges vers la zone opérationnelle jusqu'à l'achèvement de la tâche de chargement,
dans lequel les moyens de balayage sont configurés pour obtenir des informations sur au moins trois coins définissant un polygone à l'intérieur duquel au moins deux charges doivent être placées et dans lequel le polygone de la zone opérationnelle est ajouté à la zone de prélèvement avant de générer le motif de chargement pour le transport des au moins deux charges depuis la zone de prélèvement de charges vers les zones de chargement, et
dans lequel, avant de générer le motif de chargement, deux coins du polygone sont utilisés pour déterminer une inclinaison (α) entre la zone opérationnelle et deux points de la zone de prélèvement et/ou un décalage bidimensionnel (dx, dy) entre la zone opérationnelle et la zone de prélèvement.

10. Véhicule selon l'une quelconque des revendications 7 à 9, dans lequel les moyens pour exécuter le motif de chargement permettent de reconnaître un placement de charge incorrrect ou un problème d'insertion d'une charge grâce à l'utilisation d'au moins une caméra optique ou télémétrique 3D (207a, 207b).

11. Véhicule selon la revendication 10, dans lequel les moyens pour exécuter le motif de chargement permettent de tenter une correction du placement de charge dans le cas d'un placement de charge incorrect ou d'un problème d'insertion d'une charge et sont configurés de telle manière que, si la correction échoue, l'échec de la correction puisse être communiqué à un serveur ou à un système de gestion de flotte de supervision.

12. Véhicule selon la revendication 10 ou 11, dans lequel la au moins une caméra optique ou télémétrique 3D (207a, 207b) est actionnable ou rétractable afin de changer le point de vue sur la charge transportée et/ou une charge adjacente tout en exécutant la tâche de chargement.
